# EUROPÄISCHE PATENTANMELDUNG

(11) **EP 4 340 541 A1**
(43) Veröffentlichungstag der Anmeldung: **20.03.2024**
(21) Anmeldenummer: 23186288.9
(22) Anmeldetag: 19.07.2023
(51) Int. Cl.: H05B 6/06, B23B 31/117, H05B 6/10, H05B 6/14

(54) **GERÄT ZU EINER WÄRMEBEHANDLUNG**

(30) Priorität: 06.09.2022 DE 102022122629
(71) Anmelder: Franz Haimer Maschinenbau KG, 86568 Hollenbach-Igenhausen (DE)
(72) Erfinder: Haimer, Franz, 86568 Hollenbach-Igenhausen (DE)
(74) Vertreter: Schwarz, Wolfgang

(57) **Zusammenfassung**

Die Erfindung betrifft ein Gerät (2) zu einer Wärmebehandlung von Schrumpffuttern (4) für Schaftwerkzeuge (6) mit einer Aufnahmeeinrichtung (8) zum Aufnehmen eines Schrumpffutters (4), einer Wärmebehandlungseinheit (12) und einer Mess-/Recheneinheit (14) zur Temperaturmessung des Schrumpffutters (4) .

Um möglichst exakt Manteltemperaturen von Schrumpffuttern (4) messen zu können, ist vorgesehen, dass die Mess-/Recheneinheit (14) zumindest einen Temperatursensor (16) zur Erfassung einer Manteltemperatur eines in der Aufnahmeeinrichtung (8) angeordneten Schrumpffutters (4) und einen Reflexionssensor (62) aufweist, wobei die Messeinheit derart eingerichtet ist, dass ein Strom (Prüfimpuls) noch vor Beginn eines eigentlichen Wärmebehandlungsvorgangs bei dem in der Wärmebehandlungseinheit eingebrachten Schrumpffutter (4) aufgegeben wird, für diesen Prüfimpuls eine Zeit-/Stromkurve ermittelt wird und die für den Prüfimpuls ermittelte Zeit-/Stromkurve als Ganze als der magnetische Fingerabdruck für das in die Wärmebehandlungseinheit (12) eingebrachten Schrumpffutter (4) hergenommen wird, unter Verwendung des magnetischen Fingerabdrucks eine Geometrieinformation für das Schrumpffutter (4) ermittelt wird, eine Reflexionsmessung an dem in die Wärmebehandlungseinheit (12) eingebrachten Schrumpffutter (4) durchgeführt wird, unter Verwendung der Reflexionsmessung (Korrekturwert 2) eine Temperaturmessung von dem Temperatursensor (16) an dem in die Wärmebehandlungseinheit (12) eingebrachten Schrumpffutter (4) korrigiert wird.

## Beschreibung

Die Erfindung betrifft ein Gerät zu einer Wärmebehandlung, insbesondere zu einem induktiven Erwärmen oder einem Kühlen, von Schrumpffuttern für Schaftwerkzeuge, insbesondere ein Schrumpfgerät oder ein Kühlgerät oder ein Schrumpfgerät mit Kühlgerät (für Schrumpffutter). Die Erfindung betrifft weiter ein Verfahren zum Betreiben eines solchen Geräts.

Ein derartiges Gerät zu einer Wärmebehandlung von Schrumpffuttern, in diesem Fall ein Schrumpfgerät, ist aus der DE 10 2012 216 186 A1 bekannt. Dieses Schrumpfgerät sieht eine eine Manteltemperatur bzw. Oberflächentemperatur eines Schrumpffutters berührungslos erfassende sensorische Temperatur-Messeinrichtung, hier ein Strahlungs-/IR-Thermometer, vor, die bzw. das stationär in Entfernung am Schrumpfgerät positioniert ist. Zur Temperaturmessung muss allerdings eine Induktionsspulenanordnung des Schrumpfgeräts außer Eingriffsweite mit dem Schrumpffutter verfahren werden, so dass die Schrumpffutteroberfläche durch den Sensor abtastbar ist. Eine Temperaturmessung während eines Erwärmungsvorgangs ist somit nicht möglich.

Verbesserung hierzu soll ein weiteres derartiges Schrumpfgerät mit einer Induktionsspulenanordnung und einer berührungslos erfassenden sensorischen Temperatur-Messeinrichtung schaffen, welches aus der DE 10 2018 121 883 A1 bekannt ist. Bei diesem Schrumpfgerät ist vorgesehen, dass die Induktionsspulenanordnung von einem Messkanal durchsetzt ist, welcher in eine Aufnahmeöffnung für die Aufnahme eines Schrumpffutters mündet. Weiter sieht das Schrumpfgerät dann vor, dass die berührungslos erfassende sensorische Temperatur-Messeinrichtung einen Temperatursensor, hier ebenfalls ein Strahlungsthermometer, für die Erfassung der Manteltemperatur des Schrumpffutters aufweist, welcher in diesen Messkanal eingreift.

Diese hier im genannten Stand der Technik verwendeten Strahlungsthermometer (zur berührungslosen Temperaturmessung bei den Schrumpffuttern) arbeiten auf Basis von vom Körper emittierter infraroter Strahlung/Wärmestrahlung (wie die hier von einem Schrumpffutter emittierter infraroter Strahlung/Wärmestrahlung).

Jeder Körper bzw. jedes Objekt sendet eine seiner Oberflächentemperatur entsprechende Menge infraroter Strahlung bzw. Wärmestrahlung aus (, welche mit einem Strahlungsthermometer erfasst und ausgewertet wird). Die Intensität der infraroten Strahlung/Wärmestrahlung ändert sich dabei abhängig von der Objekttemperatur.

Darüber hinaus ist die Intensität der Infrarotstrahlung/Wärmestrahlung "realer Körper" aber auch material- bzw. oberflächenabhängig. D.h., (reale) Körper strahlen eine um einen material-/oberflächenabhängigen Faktor geringere Intensität ab - als ideale Wärmestrahler, d.h., ideale "Schwarze Strahler". Dieser Faktor ist als "Emissionsgrad ε" bekannt.

Für eine berührungslose Temperaturmessung muss man so, will man Temperaturen individueller Körper exakt messen, den (individuellen) Emissionsgrad ε, also die Wärmeabstrahlfähigkeit, des jeweiligen Körpers kennen.

Genau dieses erweist sich nachteilig bei den bekannten Schrumpfgeräten mit dortig verwendetem Strahlungsthermometer, wo an (vielen unterschiedlichen) realen Körpern, d.h. den Schrumpffuttern, - mit in der Praxis unbekannten Emissionsgraden ε - die Temperatur gemessen werden soll.

Meist ist deshalb das verwendete Strahlungsthermometer auf einen bestimmten Emissionsgrad ε voreingestellt (bzw. kalibriert). D.h., die exakte Temperaturmessung kann nur für einen ganz bestimmten Körper ganz bestimmten Materials/Oberfläche erfolgen (nämlich für den Körper, dessen Material/Oberfläche genau den voreingestellten Emissionsgrad ε aufweist), was zu Messfehlern bei allen anderen zu messenden Körpern (bzw. Schrumpffuttern) - mit anderen abweichenden Emissionsgraden ε - führt.

Ferner ist es aus der EP 3 557 945 B1 (Schrumpfgerät mit Heizkontrolle) bekannt, einen Strom (Prüfimpuls) mit bekannter Stromgröße, Stromform, Frequenz und Wirkungsdauer auf eine Induktionsspule eines induktiven Schrumpfgeräts noch vor Beginn eines eigentlichen induktiven Heizvorgangs bei dem in die Induktionsspule eingebrachten Schrumpffutter aufzugeben, für diesen Prüfimpuls eine Zeit-/Stromkurve für das in die Induktionsspule eingebrachte Schrumpffutter zu ermitteln und die für den Prüfimpuls ermittelte Zeit-/Stromkurve als Ganze als der magnetische Fingerabdruck für das in die Induktionsspule eingebrachte Schrumpffutter herzunehmen.

Weiter beschreibt die EP 3 557 945 B1 auch, dass und wie der für ein in die Induktionsspule eingebrachtes Schrumpffutter ermittelte magnetische Fingerabdruck bzw. die Zeit-/Stromkurve verwendet werden kann, um automatisch zu bestimmen, welches Schrumpffutter in die Induktionsspule (zum Erwärmen) eingebracht wurde, insbesondere eine Geometrie eines in die Induktionsspule eingebrachten Schrumpffutters.

Darüber hinaus zeigt die EP 3 557 945 B1 dann auch Schaltungen, welche diesen Prüfimpuls bei einer Induktionsspule erzeugen können.

Der gesamte Inhalt der EP 3 557 945 B1 (Schrumpfgerät mit Heizkontrolle) wird hiermit zum Gegenstand dieser Anmeldung gemacht.

Es ist Aufgabe der Erfindung, die im Stand der Technik bekannten Schrumpfgeräte, im Allgemeinen bekannte Geräte zu einer Wärmebehandlung von Schrumpffuttern, hinsichtlich ihrer Temperaturmessung an den zu behandelnden Schrumpffuttern zu verbessern und (dadurch) eine zuverlässige Wärmebehandlung, insbesondere ein Erwärmen oder Kühlen von Schrumpffuttern, - bei hoher Sicherheit und einfacher Handhabung - zu gewährleisten.

Diese Aufgabe wird gelöst durch ein Gerät zu einer Wärmebehandlung, insbesondere zu einem induktiven Erwärmen oder einem Kühlen, von Schrumpffuttern sowie ein Verfahren zum Betreiben eines solchen Geräts mit den Merkmalen des jeweiligen unabhängigen Anspruchs.

Vorteilhafte Weiterbildungen der Erfindung sind Gegenstand abhängiger Ansprüche sowie der nachfolgenden Beschreibung - und beziehen sich sowohl auf das Gerät wie auch auf das Verfahren.

Gegebenenfalls verwendete Begriffe, wie oben, unten, vorne, hinten, links oder rechts sind - soweit nicht anders explizit definiert - nach üblichem Verständnis - auch in Ansehung der vorliegenden Figuren - zu verstehen. Begriffe, wie radial und axial, sind, soweit verwendet und nicht anders explizit definiert, in Bezug auf Mittel- bzw. Symmetrieachsen hier beschriebener Bauteile/Komponenten - auch in Ansehung der vorliegenden Figuren - zu verstehen.

Der Begriff "im Wesentlichen" - soweit verwendet - kann (nach höchstrichterlichem Verständnis) dahingehend verstanden werden, dass mit ihm von "einem praktisch noch erheblichen Maße" die Rede ist. Durch diese Begrifflichkeit so implizierte, mögliche Abweichungen vom Exakten, können sich so ohne Absicht (also ohne funktionale Begründung) aufgrund von Fertigungs- oder Montagetoleranzen o.ä. ergeben.

Das **Gerät** zu einer Wärmebehandlung, insbesondere zu einem induktiven Erwärmen oder einem Kühlen, von Schrumpffuttern für Schaftwerkzeuge, insbesondere ein Schrumpfgerät oder ein Kühlgerät oder ein Schrumpfgerät mit Kühlgerät (für Schrumpffutter), weist eine - einen Aufnahmebereich für ein Schrumpffutter bildende - Aufnahmeeinrichtung, insbesondere eine Aufnahmeöffnung, zum Aufnehmen des Schrumpffutters, eine die Aufnahmeeinrichtung bzw. den Aufnahmebereich bezüglich einer Mittelachse, insbesondere konzentrisch, umschließenden Wärmebehandlungseinheit, insbesondere eine Induktionsspulenanordnung oder eine Kühleinheit, und eine Mess-/Recheneinheit zur, insbesondere berührungslosen, Temperaturmessung des Schrumpffutters auf.

Dabei kann eine "...einheit", wie die Mess-/Recheneinheit, insbesondere auch einen Prozessor, eine Speichereinheit, eine Schnittstelle und/oder ein, insbesondere in der Speichereinheit gespeichertes, Betriebs-, Steuer- und Berechnungsprogramm, insbesondere auch zur Durchführung, Ansteuerung von Messsensoren und Auswertung von Messungen, aufweisen.

Weiterhin ist bei dem erfindungsgemäßen Gerät vorgesehen, dass die Mess-/Recheneinheit zumindest einen Temperatursensor zur, insbesondere berührungslosen, Erfassung einer Manteltemperatur eines in der Aufnahmeeinrichtung angeordneten Schrumpffutters, und einen Reflexionssensor, insbesondere einen Infrarot-Reflexionssensor aufweist, welche um die Aufnahmeeinrichtung bzw. Aufnahmeöffnung herum angeordnet sind.

Ein solcher Reflexionssensor erweist sich diesbezüglich als besonders zweckmäßig, da mittels eines solchen Reflexionssensors u.A. auch eine Oberflächenbeschaffenheit eines Objekts (z.B. matt, glänzend, ... oder Emissionsgrad ε) wie auch die Anwesenheit eines Objekts an sich, wie hier insbesondere des in der Wärmebehandlungseinheit, insbesondere Induktionsspulenanordnung, eingebrachten Schrumpffutters, ermittelt werden kann.

Die Mess-/Recheneinheit ist weiter derart eingerichtet,

dass ein Strom (Prüfimpuls) mit bekannter Stromgröße, Stromform, Frequenz und Wirkungsdauer auf die Wärmebehandlungseinheit, insbesondere die Induktionsspulenanordnung, noch vor Beginn eines eigentlichen Wärmebehandlungsvorgangs, insbesondere des Kühlvorgangs oder des induktiven Heizvorgangs bei dem in der Wärmebehandlungseinheit, insbesondere Induktionsspulenanordnung, eingebrachten Schrumpffutter aufgebbar ist bzw. aufgegeben wird,

dass für diesen Prüfimpuls eine Zeit-/Stromkurve für das in die Wärmebehandlungseinheit, insbesondere Induktionsspulenanordnung, eingebrachte Schrumpffutter ermittelbar ist bzw. ermittelt wird und die für den Prüfimpuls ermittelte Zeit-/Stromkurve als Ganze als ein magnetischer Fingerabdruck für das in die Wärmebehandlungseinheit), insbesondere Induktionsspulenanordnung, eingebrachten Schrumpffutter herannehmbar ist bzw. hergenommen wird,

dass unter Verwendung des magnetischen Fingerabdrucks eine Geometrieinformation, insbesondere ein Außendurchmesser, für das in die Wärmebehandlungseinheit, insbesondere Induktionsspulenanordnung, eingebrachte Schrumpffutter ermittelbar ist bzw. ermittelt wird,
dass eine Reflexionsmessung von dem Reflexionssensor (62) an dem in die Wärmebehandlungseinheit (12), insbesondere Induktionsspulenanordnung (12), eingebrachten Schrumpffutter (4) durchführbar ist bzw. durchgeführt wird, insbesondere unter Verwendung der Geometrieinformation (Korrekturwert 1) eine Reflexionsmessung von dem Reflexionssensor (62) an dem in die Wärmebehandlungseinheit (12), insbesondere Induktionsspulenanordnung (12), eingebrachten Schrumpffutter (4) durchführbar und korrigierbar ist bzw. durchgeführt und korrigiert wird, und
dass unter Verwendung der Reflexionsmessung und der Geometrieinformation oder unter Verwendung der korrigierten Reflexionsmessung (Korrekturwert 2) eine Temperaturmessung von dem Temperatursensor (16) an dem in die Wärmebehandlungseinheit (12), insbesondere Induktionsspulenanordnung (12), eingebrachten Schrumpffutter (4) durchführbar und korrigierbar ist bzw. durchgeführt und korrigiert wird.

Aus der korrigierten Temperaturmessung kann dann die Manteltemperatur bzw. eine resultierende Manteltemperatur des in die Wärmebehandlungseinheit, insbesondere Induktionsspulenanordnung, eingebrachten Schrumpffutters ermittelt werden bzw. kann die Mess-/Recheneinheit derart weiter eingerichtet sein, dass aus der korrigierten Temperaturmessung dann die Manteltemperatur bzw. eine resultierende Manteltemperatur des in die Wärmebehandlungseinheit, insbesondere Induktionsspulenanordnung, eingebrachten Schrumpffutters ermittelbar ist bzw. ermittelt wird.

Bei dem **Verfahren** zum Betreiben eines - erfindungsgemäßen - **Geräts,** insbesondere eines erfindungsgemäßen Schrumpf**geräts** wird
ein Strom (Prüfimpuls) mit bekannter Stromgröße, Stromform, Frequenz und Wirkungsdauer auf die Wärmebehandlungseinheit, insbesondere die Induktionsspulenanordnung, noch vor Beginn eines eigentlichen Wärmebehandlungsvorgangs, insbesondere des Kühlvorgangs oder des induktiven Heizvorgangs bei dem in der Wärmebehandlungseinheit, insbesondere Induktionsspulenanordnung, eingebrachten Schrumpffutter aufgegeben,
für diesen Prüfimpuls eine Zeit-/Stromkurve für das in die Wärmebehandlungseinheit, insbesondere Induktionsspulenanordnung, eingebrachte Schrumpffutter ermittelt wird und die für den Prüfimpuls ermittelte Zeit-/Stromkurve als Ganze als der magnetische Fingerabdruck für das in die Wärmebehandlungseinheit, insbesondere Induktionsspulenanordnung, eingebrachten Schrumpffutter hergenommen,
unter Verwendung des magnetischen Fingerabdrucks eine Geometrieinformation, insbesondere ein Außendurchmesser, für das in die Wärmebehandlungseinheit, insbesondere Induktionsspulenanordnung, eingebrachte Schrumpffutter ermittelt,
eine Reflexionsmessung von dem Reflexionssensor (62) an dem in die Wärmebehandlungseinheit (12), insbesondere Induktionsspulenanordnung (12), eingebrachten Schrumpffutter (4) durchgeführt, insbesondere unter Verwendung der Geometrieinformation (Korrekturwert 1) eine Reflexionsmessung von dem Reflexionssensor (62) an dem in die Wärmebehandlungseinheit (12), insbesondere Induktionsspulenanordnung (12), eingebrachten Schrumpffutter (4) durchgeführt und korrigiert, und
unter Verwendung der Reflexionsmessung und der Geometrieinformation oder unter Verwendung der korrigierten Reflexionsmessung (Korrekturwert 2) eine Temperaturmessung von dem Temperatursensor (16) an dem in die Wärmebehandlungseinheit (12), insbesondere Induktionsspulenanordnung (12), eingebrachten Schrumpffutter (4) durchgeführt und korrigiert.

Vereinfacht und anschaulich ausgedrückt, - in einem Fall korrigiert der mit der Geometrieinformation korrigierte Reflexionssensor den Temperatursensor - im anderen Fall - wird der Temperatursensor mit dem "reinen"/nicht-korrigierten Reflexionssensorsignal und der Geometrieinformation korrigiert.

Dabei mag unter "korrigiert" verstanden werden, dass das zu Korrigierende unter Berücksichtigung bzw. unter Verwendung eines (vorab) Ermittelten ermittelt wird.

Hier - beispielhaft und vereinfacht bzw. anschaulich ausgedrückt - kann so bei der Reflexionsmessung bzw. bei Ermittlung der Reflexion oder bei der Temperaturmessung bzw. bei der Ermittlung der Temperatur eine Geometrieinformation, insbesondere ein Außendurchmesser des Schrumpffutters, berücksichtigt werden.

Anders ausgedrückt, bei der Reflexionsmessung bzw. bei Ermittlung der Reflexion oder bei der Temperaturmessung bzw. bei der Ermittlung der Temperatur wird die Geometrieinformation berücksichtigt - oder wieder anders ausgedrückt - das Ergebnis der Reflexionsmessung oder das Ergebnis der Temperaturmessung erfolgt in Abhängigkeit der Geometrieinformation.

Entsprechend kann dann hier - beispielhaft und vereinfacht bzw. anschaulich ausgedrückt - so bei der Temperaturmessung bzw. bei Ermittlung der Temperatur bzw. der Manteltemperatur die korrigierte Reflexionsmessung bzw. das Ergebnis der korrigierten Reflexionsmessung berücksichtigt werden - oder - bei der Temperaturmessung bzw. bei Ermittlung der Temperatur bzw. der Manteltemperatur die nicht-korrigierte Reflexionsmessung zusammen mit der Geometrieinformation, insbesondere einem Außendurchmesser des Schrumpffutters.

Anders ausgedrückt, bei der Temperaturmessung bzw. bei Ermittlung der (Mantel-)Temperatur wird die korrigierte Reflexionsmessung bzw. das Ergebnis der korrigierten Reflexionsmessung berücksichtigt - oder - es wird bei der Temperaturmessung bzw. bei Ermittlung der (Mantel-)Temperatur die nicht-korrigierte Reflexionsmessung und die Geometrieinformation (so somit unmittelbar und nicht über die korrigierte Reflexionsmessung) berücksichtigt.

"Berücksichtigt" kann auch heißen, dass diesbezüglich anzuwendende mathematische Vorschriften bzw. Algorithmen entsprechende "Korrekturterme", "Korrekturfaktoren" und/oder "Korrekturwerte" miteinbeziehen.

Dies kann beispielsweise auch derart passieren, dass unter Verwendung der Reflexionsmessung des Reflexionssensors eine Kalibrierung/Setting oder (Vor-)Einstellung bei dem zumindest einem Temperatursensor durchgeführt wird oder dass unter Verwendung der Messung des Reflexionssensors bestimmt wird, wie die resultierende Manteltemperatur, insbesondere aus den Messungen des Temperatursensors, bestimmt wird.

Die Geometrieinformation kann beispielsweise ein Außendurchmesser für das in die Wärmebehandlungseinheit, insbesondere Induktionsspulenanordnung, eingebrachte Schrumpffutter sein - oder andere Geometriedaten, welche das in die Wärmebehandlungseinheit, insbesondere Induktionsspulenanordnung, eingebrachte Schrumpffutter beschreiben, wie Material- oder Wandstärken, Längen u.Ä., wie aber auch nur Materialkennwerte.

Ein solcher, bevorzugt berührungslos messender, Temperatursensor kann beispielsweise ein Sensor sein, welcher auf (Wärme-)Strahlungsmessung bei Körpern basiert. D.h., beispielsweise ein Strahlungssensor, wie zum Beispiel ein Pyrometer oder Quotientenpyrometer.

Ein solcher Reflexionssensor kann beispielsweise ein Infrarot-Reflexionssensor sein.

Zweckmäßig kann insbesondere sein, wenn mehrere um die Aufnahmeeinrichtung bzw. den Aufnahmebereich herum angeordnete Temperatursensoren - oder zumindest ein um die Aufnahmeeinrichtung bzw. Aufnahmebereich herum angeordneter, insbesondere bezüglich der Mittelachse, schräggestellter Temperatursensor zur, insbesondere berührungslosen, Erfassung einer Manteltemperatur bzw. Oberflächentemperatur eines in der Aufnahmeeinrichtung/in dem Aufnahmebereich angeordneten Schrumpffutters verwendet werden bzw. wird. Hier kann weiter zweckmäßigerweise vorgesehen sein, dass ein solcher Temperatursensor ein Strahlungsdetektor bzw. ein Strahlungssensor ist.

Anders ausgedrückt, ganz besonderes zweckmäßig ist es, wenn die mehreren Temperatursensoren jeweils und/oder der schräggestellte Temperatursensor als Strahlungsdetektor, insbesondere als Pyrometer mit einem Strahlungsdetektor zur Erfassung einer Wärmestrahlung von einem in der Aufnahmeeinrichtung angeordneten Schrumpffutter, ausgebildet sind bzw. ist.

Vorzugsweise beträgt ein Schrägstellungswinkel des schräggestellten Temperatursensors zwischen 30° und 60°, insbesondere 45°.

Durch Schrägstellung des Sensors lässt sich, insbesondere in einem Bereich, in dem man messen und/oder die Oberflächentemperatur überwachen möchte, beispielsweise im Bereich von 50°C - 70°C, die Oberfläche besser durch einen Emissionsgrad ε erfassen.

Darüber hinaus lässt sich durch Schrägstellung des Temperatursensors ein größerer erfassbarer, durch den Temperatursensor überwachbarer Bereich realisieren.

Insbesondere kann es auch zweckmäßig sein, wenn zumindest der bzw. einer der mehreren Temperatursensoren und/oder der schräggestellte Temperatursensor eine Fokussiervorrichtung und/oder eine Abschirmeinrichtung, insbesondere eine Blende, vorsieht.

Dadurch bzw. durch eine solche Fokussiereinrichtung und/oder Abschirmeinrichtung kann erreicht werden, dass der Temperatursensor unempfindlich(-er) gegenüber Störstrahlung, z.B. von einem nahe bei dem Temperatursensor angeordneten, Wärmestrahlung abgebenden Gerät, beispielsweise ein Schrumpfgerät, wird. Auf zusätzliche Abschirmungen für den Temperatursensor kann so gegebenenfalls verzichtet werden.

Bevorzugt kann dann hier weiter vorgesehen sein, dass - werden zumindest zwei, insbesondere mehrere, Temperatursensoren bei dem Gerät verwendet - diese Temperatursensoren gemeinsam zur Manteltemperatur- bzw. Oberflächentemperaturmessung eines in der Aufnahmeeinrichtung/in dem Aufnahmebereich angeordneten Schrumpffutters herangezogen werden.

Herangezogen kann insbesondere meinen, dass eine resultierende Manteltemperatur- bzw. Oberflächentemperatur unter Verwendung der zumindest zwei, insbesondere mehreren, Temperatursensoren bzw. deren Messungen/Messwerten ermittelt wird.

Ein erster einfachster Ansatz - diesbezüglich bei mehreren Temperatursensoren könnte sein, dass ein Mittelwert aus den Temperatursensoren bzw. deren Messungen/Messwerten als resultierende Manteltemperatur bestimmt wird. Dabei können auch die einzelnen Temperatursensoren bzw. deren Messungen/Messwerten jeweils individuell gewichtet werden.

So kann weiter hier - im Falle mehrere Temperatursensoren - auch vorgesehen sein, dass zumindest zwei, insbesondere viele oder auch alle, von den Temperatursensoren unterschiedliche Konfigurationen/Messeinstellungen aufweisen.

Unter "unterschiedliche Konfigurationen/Messeinstellungen" (bei den Temperatursensoren) kann insbesondere verstanden werden, dass die Temperatursensoren unterschiedlich kalibriert sind, beispielsweise für/auf unterschiedliche Materialien/Oberflächen von Schrumpffuttern (bzw. unterschiedliche Emissionsgrade ε). Auch kann gemeint sein, dass die Temperatursensoren Messbereiche in unterschiedlichen Wellenlängenbereichen aufweisen (vgl. Quotientenpyrometer).

Anders ausgedrückt, es kann vorgesehen sein, dass bei mehreren Temperatursensoren unterschiedliche Kalibrierungen/Settings, insbesondere unterschiedliche Emissionsgrade ε eingestellt sind oder werden, und - Messungen der mehreren Temperatursensoren verglichen und/oder gemeinsam verarbeitet werden und daraus die resultierende Manteltemperatur bestimmt wird.

Mathematisch kann sich dabei insbesondere aber auch von Vorteil erweisen, dass - setzt man die Messungen der mehreren Temperatursensoren ins Verhältnis - der Emissionsgrad ε eliminierbar ist.

Alternativ dazu - kann auch vorgesehen sein, das Signal eines verwendeten Temperatur- bzw. Strahlungssensors auf unterschiedliche Art auszuwerten, z. B. unter Zugrundelegung unterschiedlicher Emissionsgrade ε, anstatt mehrere Temperatursensoren mit unterschiedlichen Konfigurationen/Messeinstellungen.

Die Temperaturmessung ist insbesondere verbessert, wenn die Sensoren um die Aufnahmeeinrichtung/um den Aufnahmebereich bzw. -öffnung herum angeordnet sind.

Weiterbildend kann auch vorgesehen werden, dass die Sensoren kreisförmig (gegebenenfalls gruppenweise auf verschiedenen Kreisen) zur Mittelachse und/oder auf unterschiedlicher axialer Höhe zur Mittelachse bei der bzw. um die Aufnahmeeinrichtung/Aufnahmebereich (herum) angeordnet sind. Dieses kann bei gleichmäßiger Teilung - oder auch mit ungleichmäßiger Teilung ausgeführt sein.

Dabei kann auch vorgesehen sein, dass jeder Sensor individuell an seiner vorbestimmten Position, beispielsweise in oder an der Wärmebehandlungseinheit - oder an einem Gehäuse dieser, befestigt ist, - oder, dass eine gemeinsame Haltevorrichtung, wie beispielsweise eine die Aufnahmeeinrichtung/den Aufnahmebereich zumindest teilweise umschließende ringförmige Baueinheit(Messring), vorgesehen ist, welche bzw. welcher die Sensoren aufnimmt - und welche bzw. welcher dann ihrerseits in dem Gerät bzw. in oder an der Wärmebehandlungseinheit/- gehäuse verbaut ist.

Bevorzugt kann dabei die im Wesentlichen ringförmige Baueinheit bzw. der Messring koaxial zu der Mittelachse bei dem Gerät, insbesondere axial benachbart zu der Wärmebehandlungseinheit, insbesondere der Induktionsspulenanordnung oder der Kühleinheit, angeordnet sein.

Zweckmäßig kann es auch sein, wenn gleichartige von den Sensoren benachbart in der im Wesentlichen ringförmigen Baueinheit angeordnet sind, beispielsweise in (Kreis-)Sektoren "gebündelt". So können beispielsweise die Temperatursensoren benachbart zueinander in einem Kreissektor der im Wesentlichen ringförmigen Baueinheit bzw. des Messrings angeordnet sein.

Auch kann weiterbildend vorgesehen werden, dass die Wärmebehandlungseinheit und/oder ein Gehäuse der Wärmebehandlungseinheit zumindest eine oder mehrere Unterbrechungen, beispielsweise in den durch die Aufnahmeeinheit gebildeten Aufnahmebereich mündende, insbesondere radiale, (Mess-)Kanäle, aufweist bzw. von solchen durchsetzt ist, in oder an welcher bzw. welchen einer bzw. jeweils einer von den Sensoren angeordnet ist.

Im Fall einer Induktionsspulenanordnung als Wärmebehandlungseinheit kann es insbesondere zweckmäßig sein, wenn um die Kanäle - unter Freihaltung der jeweiligen Unterbrechung bzw. des jeweiligen Kanals - eine Spulenwicklung der Induktionsspulenanordnung gewickelt ist.

In einem solchen (Mess-)Kanal bzw. zumindest teilweise in einem solchen Messkanal und/oder an einem solchen (Mess-)Kanal kann dann ein Sensor, wie der Temperatursensor und/oder der Reflexionssensor, angeordnet bzw. eingesetzt sein - und zwar derart, dass er durch den Messkanal hindurch misst.

Ist der Sensor darüber hinaus auch noch außerhalb eines Gehäuses der Wärmebehandlungseinheit angeordnet, so ist es zweckmäßig, wenn das Gehäuse einen entsprechenden Durchbruch für den Sensor (zum Hindurchmessen des Sensors) vorsieht.

Insbesondere ist es - messtechnisch - zweckmäßig, wenn ein solcher Messkanal im Wesentlichen radial zur Mittelachse durch die Wärmebehandlungseinheit und/oder deren Gehäuse hindurch verläuft.

Weiterbildend kann auch vorgesehen sein, dass ein solcher Messkanal in einem axialen Zentralbereich der Induktionsspulenanordnung vorzugsweise in etwa mittig zwischen deren axialen Enden angeordnet ist.

Weiterhin erweist es sich als zweckmäßig, wenn in einen solchen Messkanal ein, insbesondere für Wärmestrahlung durchlässiges, vorzugsweise auswechselbares Schutzfenster insbesondere zum Schutz des Sensors vor Verunreinigungen und/oder Beschädigungen eingesetzt ist.

Auch kann diesbezüglich alternativ oder ergänzend - zu den umwickelten (Mess-)Kanälen - vorgesehen sein, dass - im Fall von einer Induktionsspulenanordnung als Wärmebehandlungseinheit - die Induktionsspulenanordnung zwei oder mehrere beabstandete Teilspulen aufweist, wobei dann dort in den Abständen zwischen den Teilspulen ein bzw. die Sensoren - entsprechend der Kanalanordnung - angeordnet sind (und hindurchmessen können). Entsprechendes kann auch bei einer Kühleinheit - mit Teileinheiten als Wärmebehandlungseinheit vorgesehen sein.

Ferner kann die Messwertübertragung von dem Temperatursensor und/oder Reflexionssensor kabelgebunden - oder auch kabellos zu der Mess-/Recheneinheit erfolgen.

Zweckmäßig ist es auch, wenn das Gerät mit einer Steuereinheit ausgebildet ist. Diese Steuereinheit kann insbesondere zur Steuerung der Wärmebehandlungseinheit, wie der Induktionsspulenanordnung oder der Kühleinheit, dienen, beispielsweise derart, dass die Steuereinheit eine Leistung der Wärmebehandlungseinheit, beispielsweise eine Stromzufuhr der Induktionsspulenanordnung, in Abhängigkeit der unter Verwendung der Sensoren ermittelten Manteltemperatur steuert.

Ferner kann auch vorgesehen sein, dass die ermittelte Manteltemperatur (einfach nur) dazu verwendet wird, um einen Temperaturzustand des Schrumpffutters zu detektieren. D.h., einfach und anschaulich, mittels der ermittelten Manteltemperatur kann erkannt werden, ob sich in dem Gerät ein bereits erwärmtes Schrumpffutter befindet - und, wenn ja, mit welcher Manteltemperatur.

In einem solchen Fall kann beispielsweise die Steuerung einen Erwärmungsvorgang (gar) nicht starten, ist das Schrumpffutter bereits (zu) heiß.

Ferner kann es auch zweckmäßig sein, wenn das Gerät eine Anzeigeeinrichtung zur Anzeige eines Wärmezustands, insbesondere einer in der Aufnahmeeinrichtung/in dem Aufnahmebereich angeordneten Werkzeugaufnahme, insbesondere eines Schrumpffutters, aufweist. Dies können beispielsweise Farbdioden sein. Unterschiedliche Farben können unterschiedliche Wärmezustände anzeigen.

Bevorzugt kann das Betreiben eines erfindungsgemäßen Schrumpfgeräts darin bestehen, dass ein Schrumpffutter in der von einer als Induktionsspulenanordnung ausgebildeten Wärmebehandlungseinrichtung umschlossenen Aufnahmeeinrichtung induktiv erwärmt und dadurch aufgeweitet wird und dass unter Verwendung der resultierenden Manteltemperatur der Erwärmungsvorgang kontrolliert wird, insbesondere der Erwärmungsvorgang bei Erreichen einer vorgegebenen Temperatur automatisch gestoppt wird.

Oder dass ein Schrumpffutter in der von einer als Kühleinheit ausgebildeten Wärmebehandlungseinrichtung umschlossenen Aufnahmeeinrichtung gekühlt und dass unter Verwendung der resultierenden Manteltemperatur der Kühlvorgang kontrolliert wird.

Dieses Kontrollieren kann beispielsweise dadurch geschehen, dass eine Stromzufuhr zu der Wärmebehandlungseinheit in Abhängigkeit der resultierenden Manteltemperatur verändert bzw. angepasst und/oder gesteuert wird.

Der Erfindung liegt - ausgehend von dem Problem unterschiedlicher und unbekannter Emissionsgrade ε bei einer Mehrzahl von zu "Temperatur-messenden" Schrumpffuttern - die Überlegung zugrunde, dass bei einem (Strahlungs-)Sensor für die Temperaturmessung das Wissen über den spezifischen Emissionsgrades ε des jeweiligen (individuellen) Schrumpffutters (für eine exakte Temperaturmessung/-bestimmung) notwendig wäre bzw. ist - und so der (Strahlungs-)Sensor jeweils individuell für diesen Emissionsgrad ε (ggfl. berechnungstechnisch) eingestellt sein müsste bzw. der (Strahlungs-)Sensor auf das jeweilige Schrumpffutter individuell kalibriert werden bzw. sein müsste.

Um diesem Abzuhelfen, sieht die Erfindung einen Reflexionssensor bzw. eine Reflexionsmessung an einem in der Aufnahmeeinrichtung angeordneten, zu messenden Schrumpffutter vor, mittels welcher - spezifisch für das in der Aufnahmeeinrichtung angeordnete Schrumpffutter - Informationen, wie beispielsweise der individuelle Emissionsgrad ε, ermittelt werden (können), - unter Verwendung derer dann die (korrigierte) Temperaturmessung erfolgt.

Da aber auch erkannt wurde, dass die Reflexionsmessung auch beeinflusst wird von einem Abstand "Reflexionssensor - Schrumpffutter bzw. Schrumpffutteroberfläche/-mantel", was wiederum auch wieder abhängig ist von einer Geometrie des in der Aufnahmeeinrichtung angeordneten Schrumpffutters, insbesondere von dessen Außendurchmesser, sieht die Erfindung ein Vorgehen vor, um - auf automatisierte Weise - an die diesbezügliche Geometrieinformationen, wie insbesondere den Außendurchmesser des in der Aufnahmeeinrichtung angeordneten Schrumpffutters, zu kommen.

Diese erfolgt nach der Erfindung durch den (individuellen) magnetischen Fingerabdruck bzw. durch die Ermittlung des (individuellen) magnetischen Fingerabdruckes für ein in der Aufnahmeeinrichtung angeordnetes (individuelles) Schrumpffutter, mittels welchem - spezifisch für das in der Aufnahmeeinrichtung angeordnete Schrumpffutter - dann Geometrieinformationen, wie der individuelle Außendurchmesser, ermittelt bzw. abgerufen werden (können).

Unter Verwendung dieser Geometrieinformation kann dann die Reflexionsmessung durchgeführt und korrigiert werden (mittels Korrekturwert 1 korrigierte Reflexionsmessung) und - weiter dann - die Temperaturmessung unter Verwendung der korrigierten Reflexionsmessung durchgeführt und korrigiert werden (mittels Korrekturwert 2 korrigierte Temperaturmessung).

Alternativ kann auch die Geometrieinformation unmittelbar bei der Temperaturmessung - jetzt dann aber zusammen mit einer nicht-korrigierten Reflexionsmessung berücksichtigt und diese so durchgeführt werden.

Dies führt so bei der Erfindung insbesondere dazu, dass ggfl. notwendige zusätzliche Abstandsensoren - für den Abstand "Reflexionssensor - Schrumpffutter bzw. Schrumpffutteroberfläche/-mantel" - überflüssig sind.

Des Weiteren erweist sich bei der Erfindung von besonderem Vorteil, dass sie automatisch erfolgen kann, da die gesamte Erfindung automatisiert durch entsprechende Steuerprogramme - für die Sensoren, Messungen und Berechnungen - ablauffähig ist.

Einfachheit, Effizienz und Effektivität zeichnen so die Erfindung aus.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit der bzw. den Zeichnungen/Figuren näher erläutert werden (gleiche Bauteile/Komponenten und Funktionen weisen in den Zeichnungen/Figuren gleiche Bezugszeichen auf).

Die Ausführungsbeispiele dienen der Erläuterung der Erfindung und beschränken die Erfindung nicht auf darin angegebene Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigen:
- FIG 1: ein Schrumpfgerät mit einer mit mehreren berührungslos messenden Temperatursensoren und einem Reflexionssensor bestückte Induktionsspulenanordnung gemäß einer Ausführung;

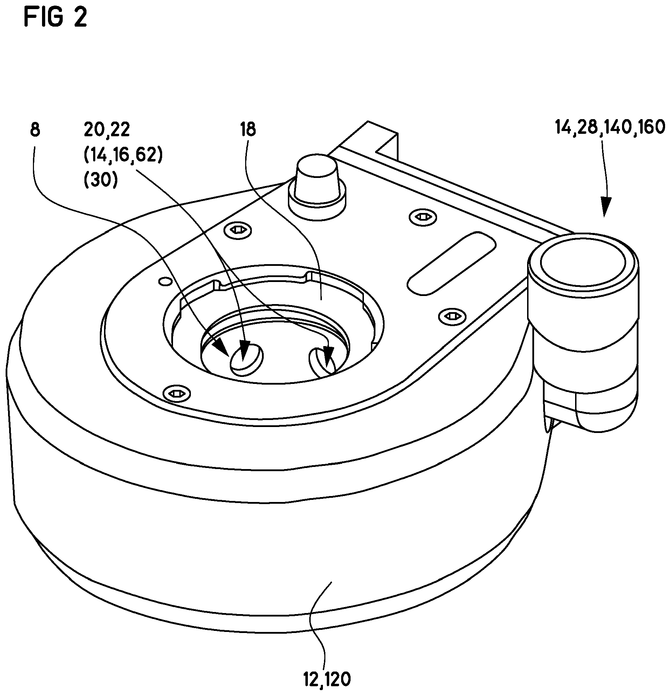

- FIG 2: die Induktionsspulenanordnung des Schrumpfgeräts nach FIG 1 in perspektivischer Darstellung;
- FIG 3: einen Radialschnitt durch die Induktionsspulenanordnung des Schrumpfgeräts nach FIG 1;
- FIG 4: einen Axialschnitt durch die Induktionsspulenanordnung des Schrumpfgeräts nach FIG 1;
- FIG 5: ein Schrumpfgerät mit Kühlgerät und mit in das Kühlgerät integrierten Messring gemäß einer Ausführung in perspektivischer Darstellung;
- FIG 6: das Schrumpfgerät mit Kühlgerät und mit dem in das Kühlgerät integrierten Messring nach FIG 5 in Seitendarstellung;
- FIG 7: der Messring des Schrumpfgeräts nach FIG 5 in perspektivischer Darstellung;
- FIG 8: eine schematische Darstellung der Funktionsweise des Messrings des Schrumpfgeräts nach FIG 5;
- FIGen 9a, 9b: ein weiterer Messring in zwei Darstellungen.

### - Schrumpfgerät mit berührungsloser Temperaturmessung (FIGen 1 bis 4)

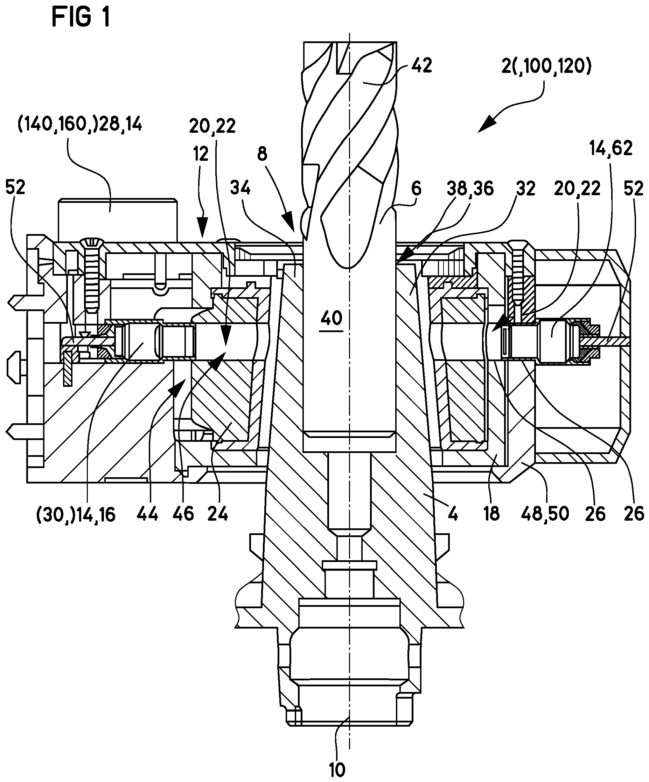

FIG 1 zeigt einen Teil eines Schrumpfgerätes 2 zum Ein- bzw. Ausschrumpfen 120 von Schaftwerkzeugen 6 bzw. (gezeigt) von einem Fräswerkzeug 6 in bzw. aus einem Schrumpffutter 4, nämlich eine Induktionsspulenanordnung 12 mit mehreren berührungslos messenden Temperatursensoren 16 sowie mit einem Reflexionssensor 62.

FIGen 2 bis 4 zeigen die Induktionsspulenanordnung 12 in verschiedenen Darstellen/Schnitten im Detail.

Das Schrumpfgerät 4 weist, wie FIG 1 zeigt, zum Zwecke des Ein- bzw. Ausschrumpfen 120 die - längs ihrer Spulenachse 10 verschiebbare - Induktionsspulenanordnung 12 zum induktiven Erwärmen 120 des Schrumpffutters 4 (vgl. insbesondere FIGen 2 bis 4) und eine (schematisch dargestellte) Kontroll-/Steuereinheit 28 zur Vorgangs- bzw. Erwärmungskontrolle 160 bei dem Schrumpffutter 4 sowie eine Mess-/Recheneinheit 14 zur Durchführung und Auswertung von von den Temperatursensoren 16 bzw. dem Reflexionssensor 62 ausgeführten Messungen auf.

Das - in diesem Fall in FIG 1 dargestellte - Schrumpffutter 4 umfasst als Hülsenpartie 32 einen zylindrisch hohlen Spannbereich 34, der über eine Stirnöffnung 36 am vorderen Stirnende 38 des Schrumpffutters 4 zum Einführen des Werkzeug- bzw. Fräserschafts 40 zugänglich ist.

Der Spannbereich 34 des Schrumpffutters 4 besitzt einen etwas geringeren Nenndurchmesser als der Werkzeugschaft 40, so dass dieser in an sich bekannter Weise durch (induktives) Erwärmen 120 des Schrumpffutters 4 klemmend einspannbar ist. Im eingeschrumpften Zustand wird der Werkzeug- bzw. Fräserschaft 40 zur Übertragung eines Drehmoments auf den vorderen Arbeitsabschnitt 42 des Rotationswerkzeugs 6 reibschlüssig im Presssitz drehfest gehalten.

Zum Ausschrumpfen wird ebenfalls nur das Schrumpffutter 4 einseitig erwärmt 120, bis die thermische Ausdehnung den Werkzeug- bzw. Fräserschaft 40 wieder zur Entnahme freigibt.

Die Induktionsspulenanordnung 12 umschließt - wie hier die FIGen 1 bis 4 zeigen - konzentrisch um ihre Spulenachse 10 - eine Aufnahmeöffnung 8 für das Schrumpffutter 4.

Durch axiales Verschieben der Induktionsspulenanordnung 12 - längs ihrer Spulenachse 10 - wird das Schrumpffutter 4 - in Bezug auf die Induktionsspulenanordnung 12 - in die gewünschte Erwärmungs-/Aufheizposition gebracht (vgl. FIG 1). Dazu können auch Anschlagelemente, beispielsweise eine Polscheibe, an der Induktionsspulenanordnung vorgesehen sein.

Um ein elektromagnetisches Wechselfeld zu erzeugen, enthält, wie insbesondere den FIGen 1, 3 und 4 entnehmbar ist, die Induktionsspulenanordnung 12 eine Spulenwicklung 24 in einem Spulengehäuse 18.

Um die Manteltemperatur des Schrumpffutters 4 beim Erwärmen 120 erfassen zu können, ist die Induktionsspulenanordnung 12 von mehreren, in diesem Fall sechs, jeweils in die Aufnahmeöffnung 8 mündenden Messkanälen 22 radial bezüglich der Spulenachse 10 durchsetzt.

Dabei sind die - sechs - Messkanäle 22, wie die FIGen 3 und 4 zeigen, - bei annähernd gleicher Teilung um die Spulenachse 10 herum - auf gleicher axialer Höhe bezüglich der Spulenachse 10 in einem axialen Zentralbereich 44 der Induktionsspulenanordnung 12 - zwischen deren axialen Enden - angeordnet, wobei die Spulenwicklung 24 unter Freihaltung der sechs Messkanäle 22 um diese herumgewickelt ist. Der spulenseitige innere Abschnitt 46 des jeweiligen Messkanals 22 fluchtet mit einem Durchbruch 26 in der Außenwand 48 des Induktionsspulengehäuses 50 (so auch insgesamt sechs Durchbrüche in der Außenwand 48 des Induktionsspulengehäuses 50).

In fünf der - sechs - Durchbrüche 26 des Induktionsspulengehäuses 50 ist je ein berührungslos messender Temperatursensor 16, hier ein (berührungslos) Wärmestrahlung messender Strahlungsdetektor 16 (bzw. ggfl. Pyrometer 30), eingesetzt, der durch "seinen jeweiligen" Messkanal 22 in der Spulenwicklung 24 hindurch von dem Schrumpffutter 4 emittierte Wärmestrahlung erfasst. Im sechsten der - sechs - Durchbrüche 26 des Induktionsspulengehäuses 50 ist ein Infrarot-Reflexionssensor 62 eingesetzt, der - ebenfalls - durch "seinen" Messkanal 22 in der Spulenwicklung 24 hindurch eine Reflexionsmessung (an dem Schrumpffutter 4) durchführt.

Die Kontrolleinheit 28 sowie die Mess-/Recheneinheit 14 sind eingangsseitig mit den Temperatursensoren 16 und dem Reflexionssensor 62 mittels Kabeln 52 gekoppelt - und erhalten so deren Messsignale, welche in der Mess-/Recheneinheit 14 gemeinsam zu einer resultierenden Mantel-/Oberflächentemperatur des zu messenden Schrumpffutters 4 verarbeiten werden 140.

Durch die Kontrolleinheit 28 kann dann - auf Basis der ermittelten resultierenden Mantel-/Oberflächentemperatur des zu messenden Schrumpffutters 4 - ein Schrumpfvorgang bei dem Schrumpffutter 4 durchgeführt werden.

Hierbei kann während des Erwärmens 120 des Schrumpffutters 4 - auf Basis der ermittelten resultierenden Manteltemperatur - (automatisiert) eine Temperaturkontrolle erfolgen, beispielsweise in der Form, dass - mittels der Kontrolleinheit 28 - die Stromzufuhr zu der Induktionsspulenanordnung in Abhängigkeit von der resultierenden Manteltemperatur beeinflusst wird 160.

Um die resultierende Mantel-/Oberflächentemperatur - mittels der Temperatursensoren 16 und dem Reflexionssensor 62 - zu ermitteln, ist folgende Vorgehensweise vorgesehen:
Zunächst wird - ausgelöst durch die Mess-/Recheneinrichtung 14 ein Prüfimpuls, d.h. ein Strom mit bekannter Stromgröße, Stromform, Frequenz und Wirkungsdauer auf die Induktionsspulenanordnung 12 noch vor Beginn eines eigentlichen Wärmebehandlungsvorgangs bei dem in der Induktionsspulenanordnung 12 eingebrachten Schrumpffutter 4 aufgegeben.

Für diesen Prüfimpuls wird eine Zeit-/Stromkurve für das in die Induktionsspulenanordnung 12 eingebrachte Schrumpffutter 4 ermittelt. Die für den Prüfimpuls ermittelte Zeit-/Stromkurve als Ganze wird als ein magnetischer Fingerabdruck für das in die Induktionsspulenanordnung 12 eingebrachten Schrumpffutter 4 hergenommen.

Unter Verwendung des magnetischen Fingerabdrucks wird dann eine Geometrieinformation, wie hier dann ein Außendurchmesser, für das in der Induktionsspulenanordnung 12 eingebrachte Schrumpffutter 4 ermittelt.

Ferner wird dann eine Reflexionsmessung durch den Reflexionssensor 62 an dem in die Induktionsspulenanordnung 12 eingebrachten Schrumpffutter 4 durchgeführt, wobei mittels der Geometrieinformation (Korrekturwert 1) die Reflexionsmessung von dem Reflexionssensor 62 korrigiert wird.

Anschließend werden - unter Verwendung der korrigierten Reflexionsmessung (Korrekturwert 2) - die Temperaturmessungen von dem Temperatursensoren 16 durchgeführt und korrigiert.

Aus den korrigierten Temperaturmessungen der Temperatursensoren wird dann die resultierende Manteltemperatur des Schrumpffutters 4 ermittelt.

### - Schrumpfgerät mit Kühlgerät mit berührungsloser Temperaturmessung (FIGen 5 bis 8)

FIGen 5 und 6 zeigen ein Schrumpfgerät 2 mit einem Kühlgerät 12, wie es in der EP 3 444 064 A1 gezeigt und im Detail beschrieben ist (siehe FIGen 1 und 4 und [0014] bis [0026] der EP 3 444 064 A1), deren Inhalt hiermit in diese Anmeldung aufgenommen wird (Bezugsdokument).

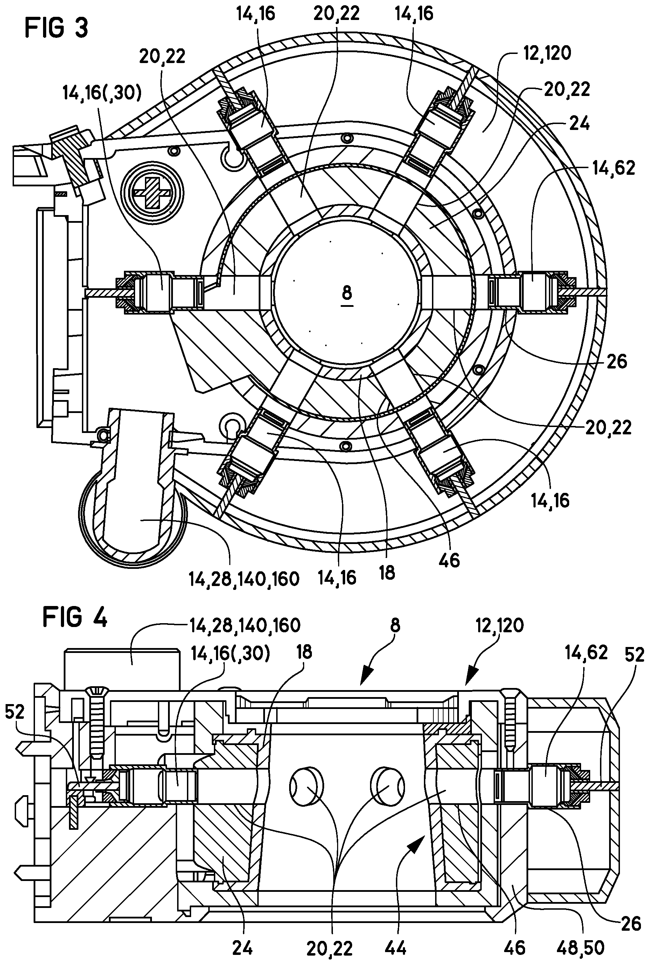

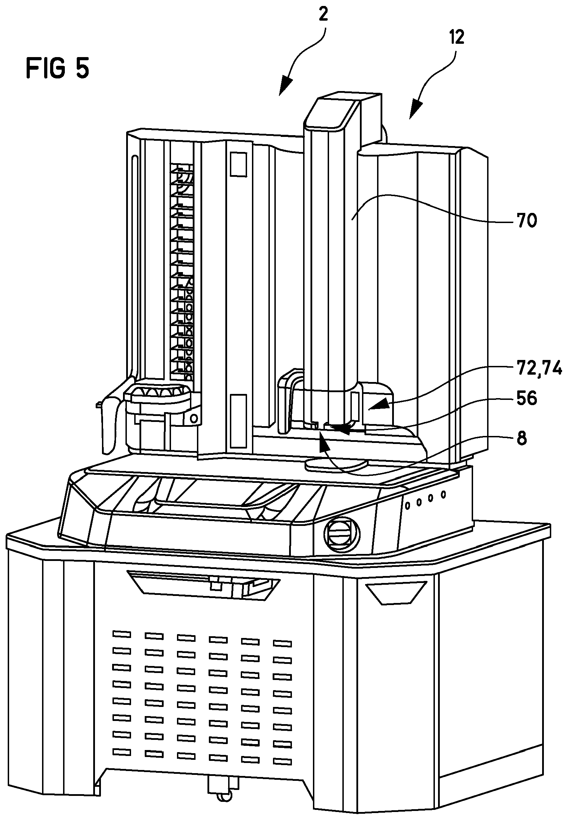

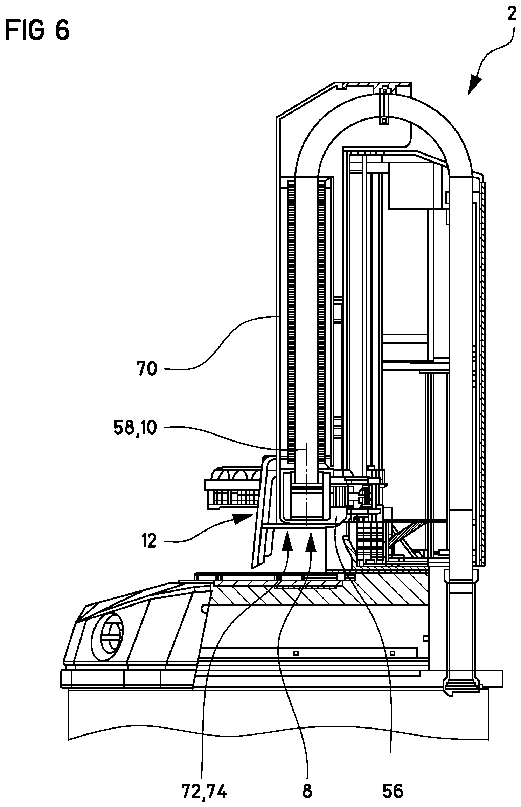

Wie FIG 5 (vgl. auch FIG 4 der EP 3 444 064 A1 (Bezugsdokument)) und FIG 6 (vgl. auch FIG 1 der EP 3 444 064 A1 (Bezugsdokument)) zeigen, weist das Kühlgerät 12 einen an einem Gestell oder Ständer 70 verschiebbar geführten Kühlkopf 72 auf, der einen zumindest auf den zu kühlenden Teil des Schrumpffutters 4 aufsetzbaren Kühlaufsatz 74 enthält. Der Kühlaufsatz 74 enthält eine Aufnahmeöffnung 8 (vgl. Durchgangsöffnung 6 in der EP 3 444 064 A1), deren Innenkontur/- durchmesser auf die Außenkontur/-durchmesser des zu kühlenden Teils des Schrumpffutters 4 (nicht dargestellt) abgestimmt ist (, so, dass ein Aufschieben/-setzen des Kühlaufsatzes 74 auf ein zu kühlendes Schrumpffutter 4 möglich ist).

Für weitere Details zu dem Schrumpfgerät 2 und dessen Kühlgeräts 12 wird auf die EP 3 444 064 A1 verwiesen (siehe FIGen 1 und 4 und [0014] bis [0026] der EP 3 444 064 A1).

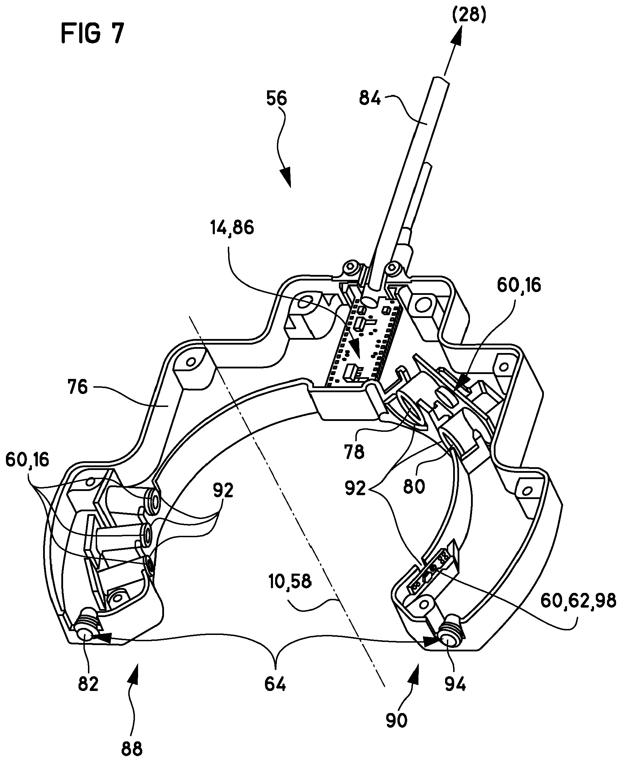

Wie FIGen 5 und 6 weiter zeigen, ist in den Kühlaufsatz 74 ein (über einen bestimmten Kreisringsektor offener) Messbzw. Sensorring 56 (vgl. FIG 7 (einen alternativen Sensorring zeigen die FIGen 9a und 9b)) integriert, mittels welchem - berührungslos - die Manteltemperatur eines in dem Kühlaufsatz 74 bzw. dessen Aufnahmeöffnung 8 aufgenommenen Schrumpffutters 4 messbar ist. Und zwar integriert derart, dass am unteren Rand des Kühlaufsatzes 74 der Messring 56 (vgl. FIG 7) - koaxial (mit seiner Mittelachse 58) zu der Mittelachse 10 des Kühlkopfes 72 bzw. Kühlaufsatzes 74 angeordnet ist.

Der Innendurchmesser des Messrings 56 ist dabei im Wesentlichen gleich dem des Kühlaufsatzes 74 (an dessen unterem Ende), wodurch dieser so Teil der Aufnahmeöffnung 8 wird.

FIG 7 zeigt den Messring 56 - in einem "oben" aufgeschnittenen Zustand, welcher einen Blick in ein Gehäuse 76 des Messrings 56 erlaubt, - im Detail.

Wie Fig. 7 verdeutlicht, handelt es sich bei dem Messring 56 um einen nahezu geschlossenen ringförmigen Körper - mit an seinem offenen Sektor sich gegenüberliegenden zwei Ringschenkel 88, 90.

Wie FIG 7 auch zeigt, sind in dem den Körper des Messrings 56 ausbildenden Messringgehäuse 76 mehrere verschiedenartige Sensoren 60, 16, 62 aufgenommen, nämlich drei nebeneinander angeordnete Infrarot-Temperatursensoren 16 - in einem linken Schenkel 88 des bildlich in Fig. 7 dargestellten Messrings 56, ein weiterer Infrarot-Temperatursensor 60, 16 (umfassenden einen Sender 78 und einen Empfänger 80), sowie ein Reflexionssensor 60,62 - in einem rechten Schenkel 90 des bildlich in Fig. 7 dargestellten Messrings 56.

Alle diese Sensoren 60, 16, 62 sind derart - in dem Messring 56 bzw. in dessen Gehäuse 76 - ausgerichtet aufgenommen, dass ihre jeweilige Messrichtung radial auf die Mittelachse 58, 10 ausgerichtet ist. Dazu sieht das Messringgehäuse 76 auch - radial innere - Durchgänge bzw. Öffnungen 92 vor, - an welchen angeordnet - durch welche hindurch die Sensoren 60, 16, 62 - radial nach innen - messen können.

In einer - nicht dargestellten - Ausführungsform können die Sensoren 60, 16, 62 auch im Wesentlichen senkrecht zum Außenmantel des Schrumpffutters 4 ausgerichtet sein, der in vielen Fällen konisch geformt ist.

Über Leitungen (nicht dargestellt) sind die Sensoren 60, 16, 62 mit einen ebenfalls in dem Messring 56 bzw. in dessen Gehäuse 76 aufgenommenen Microcontroller 86 (mit einer Mess/Recheneinheit 14 zur Durchführung und Auswertung von von den Temperatursensoren 16 bzw. dem Reflexionssensor 62 ausgeführten Messungen) verbunden, so dass Messsignale der Sensoren 60, 16, 62 diesem zur Verarbeitung, hier insbesondere zur Ermittlung einer resultierenden Manteltemperatur eines in dem Kühlaufsatz 74 aufgenommenen Schrumpffutters 4 140, zugeführt werden.

Der Microcontroller 86 seinerseits ist über eine Zuleitung 84 mit einer Steuereinheit 28 bzw. - kurz mit einer Steuerung 28 - des Kühlgeräts 12 verbunden, an welche er seine Signale, wie die resultierende Manteltemperatur, überträgt. Die Steuerung 28 kann dann in Abhängigkeit aktuell ermittelter Manteltemperaturen einen Kühlvorgang 120 (bei einem in dem Kühlaufsatz 74 aufgenommenen Schrumpffutter 4) steuern 160.

Wie Fig. 7 auch zeigt, sieht der Messring 56 eine LED-(Wärme)Statusanzeige 64 in Form zweier farbiger, an den Stirnseiten der beiden Schenkel 88, 90 angeordneter und so für einen Benutzer sichtbarer LED Leuchtdioden 82, 94 vor, von denen die eine rot 82, die andere grüne 94 ist - und welche - ebenfalls über den Microcontroller 86 mit der Steuerung 28 verbunden - auch über die Steuerung 28 gesteuert werden.

Eine - leuchtende - grüne LED Leuchtdiode 94 zeigt einen Wärmezustand eines Schrumpffutters 4 an, das beispielsweise so stark abgekühlt ist, dass es mit der bloßen Hand gefahrlos berührt werden kann; eine - leuchtende - rote LED Leuchtdiode 82 zeigt einen Wärmezustand eines noch nicht (genügend) abgekühlten Schrumpffutters 4 an. Ein rotes Blinken der roten LED Leuchtdiode 82 weist auf einen aktiven Kühlvorgang durch die Kühlung 12 hin.

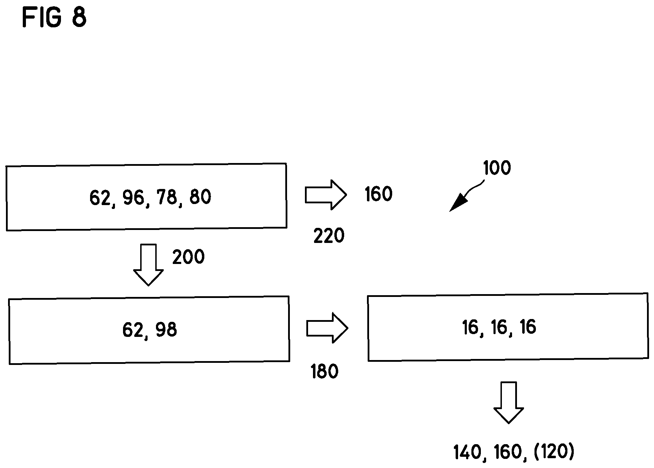

Fig. 8 verdeutlicht die Funktionsweise 100 bzw. das Zusammenwirken 200 der verschiedenen Sensoren 60, 16, 62 - bei deren Messungen bzw. bei der Ermittlung der Mantel-/Oberflächentemperatur eines durch Kühlung zu kühlenden bzw. in dem Kühlaufsatz 74 aufgenommenen Schrumpffutters 4 140 und Steuerung 160.

Der Messring 56 bzw. dessen Sensoren 60, 16, 62 (und Leuchtdioden 82, 94) sind aktiv bzw. werden aktiv geschaltet (1) sobald der Kühlaufsatz 74 - mit integriertem Messring 56 von oben über das zu kühlende Schrumpffutter 4 nach unten bewegt wird, (2) während des Kühlvorgangs 120, bei dem das Schrumpffutter 4 in dem Kühlaufsatz 74 aufgenommen ist (und (gesteuert über die Steuerung 28 (Anm.: die Steuerung 28 stellt dabei die Kühlparameter, wie eine Kühldauer etc., gegebenenfalls unter Verwendung von der ermittelten Oberflächentemperatur oder Oberflächenfarbe eines Schrumpffutters 4 ein)) gekühlt wird) und (3) solange bis der Kühlaufsatz 74 mit integriertem Messring 56 vollständig - nach oben hochgeschoben - von dem Schrumpffutter 4 abgehoben ist (insgesamt beispielsweise "Messphase"/"Messzyklus" genannt).

Der Anfang und das Ende der Messungen bzw. der Messphase ((1) bis (3)) kann (automatisch) mittels des Reflexionssensors 62 ermittelt werden, welcher - durch einfache Reflexionsmessung - erkennt, ob sich ein Schrumpffutter 4 in dem Messring 56 befindet 220.

Bei der Temperaturmessung bzw. Temperaturermittlung 140 (, welche durch die Mess-/Recheinheit 14 durchgeführt und gesteuert wird,) wird ein Prüfimpuls, d.h. ein Strom (Prüfimpuls) mit bekannter Stromgröße, Stromform, Frequenz und Wirkungsdauer noch vor Beginn des eines eigentlichen Kühlvorgangs auf das Schrumpffutter aufgegeben.

Für diesen Prüfimpuls wird eine Zeit-/Stromkurve ermittelt - und die Zeit-/Stromkurve als Ganze wird als ein magnetischer Fingerabdruck für das Schrumpffutter 4 hergenommen.

Unter Verwendung des magnetischen Fingerabdrucks wird eine Geometrieinformation, hier der Außendurchmesser, für das Schrumpffutter 4 ermittelt.

Ferner wird eine Reflexionsmessung mittels des Reflexionssensors 62 an dem Schrumpffutter durchgeführt, wobei eine Reflexionsinformation, wie der Emissionsgrad, für das Schrumpffutters ermittelt wird.

Dann werden mittels der Temperatursensoren 16 Temperaturmessungen an dem Schrumpffutter durchgeführt, wobei jeweils die Geometrieinformation bzw. der Außendurchmesser und die Reflexionsinformation bzw. der Emissionsgrad berücksichtigt werden.

Aus den Temperaturmessungen lässt sich dann - beispielsweise durch Mittelwertbildung - eine resultierende Manteltemperatur des Schrumpffutters berechnen.

Auf Basis der so ermittelten Oberflächen-/Manteltemperaturen eines sich in dem Messring 56 befindenden Schrumpffutters 4 erfolgt dann die Steuerung 160 der Kühlung 120, wie auch werden - entsprechend der ermittelten Oberflächen-/Manteltemperaturen - die LED-(Wärme)Statusanzeigeleuchtdioden 82, 94 bzw. 64 angesteuert 160.

Im Speziellen mag sich die Leuchtdiodensteuerung dabei so gestalten, dass (1) wird zunächst der Kühlaufsatz 74 mit dem Messring 56 über das zu kühlende (heiße) Schrumpffutter 4 geschoben, die rote Leuchtdiode 82 - rot leuchtend - den heißen Zustand des Schrumpffutters 4 bzw. dessen Oberfläche/Mantel anzeigt.

Ist dann der Kühlaufsatz 74 vollständig über das Schrumpffutter 4 geschoben - und der Kühlvorgang 120 wird gestartet (2), blinkt die rote Leuchtdiode 82 - während des Kühlvorgangs 120 - und zeigt das "Kühlen" 120 an.

Ist der Kühlvorgang 120 beendet - und der Kühlaufsatz 74 wird nach oben angehoben (3), so leuchtet - im Fall eines noch zu heißen Schrumpffutters 4 - die rote Leuchtdiode 82 und - im Fall eines genügend heruntergekühlten Schrumpffutters 4 - die grüne Leuchtdiode 94. Zeigt so die rot leuchtende Leuchtdiode 82 ein noch zu heißes Schrumpffutter 4 an, so kann der Kühlaufsatz 74 wieder nach unten über das Schrumpffutter 4 heruntergeschoben - und ein weiterer Kühlvorgang 120 durchgeführt werden.

Gegebenenfalls kann auch der gesamte Kühlvorgang 120 - automatisch - an die Temperaturermittlung 140 angekoppelt sein - und darüber gesteuert 160 werden.

Ergänzend wird auch darauf verwiesen, dass ein dem vorbeschriebenen Messring 56 entsprechender Messring 56 auch an einer Induktionsspulenanordnung 12 eines/des Schrumpfgeräts 2 angeordnet sein kann, um dort - von in der Aufnahmeöffnung 8 der Induktionsspulenanordnung 12 aufgenommenen Schrumpffuttern 4 - deren Manteltemperaturen zu messen (vgl. FIGen 1 bis 4). Entsprechend auch kann ein dem vorbeschriebenen Messring 56 entsprechender Messring 56 an eigenständigen bzw. alleine arbeitenden, separaten Kühlgeräten 12 angeordnet sein.

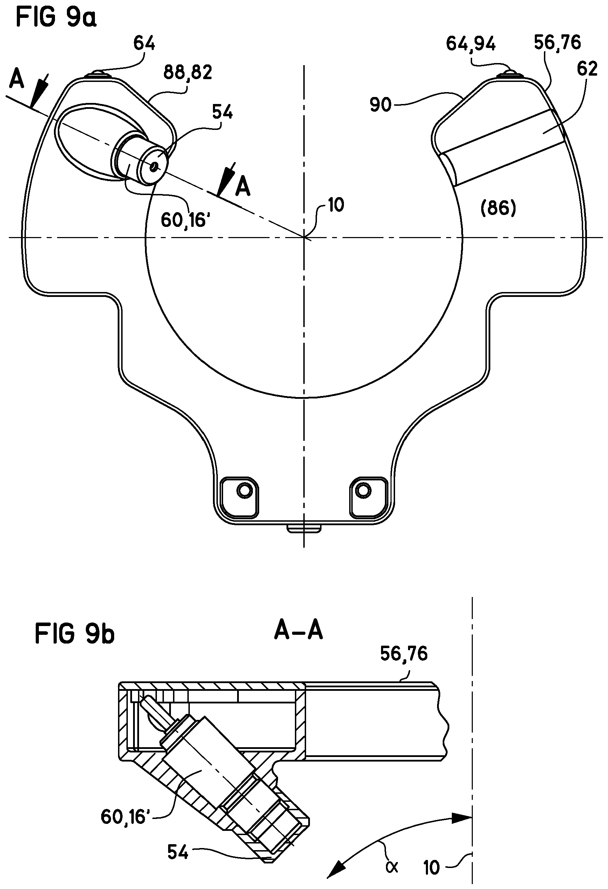

FIGen 9a und b zeigen einen alternativen (, in seiner Funktionsweise gleich einsetzbaren bzw. eingesetzten), in den Kühlaufsatz 74 integrierbaren Messring 56 - mit FIG 9a diesen in einer Gesamtansicht und mit FIG 9b einen Detailausschnitt von diesem in "oben" aufgeschnittenem Zustand.

Wie Fig. 9a verdeutlicht, handelt es sich auch bei diesem Messring 56 um einen nahezu geschlossenen ringförmigen Körper - mit an seinem offenen Sektor sich gegenüberliegenden zwei Ringschenkel 88, 90.

Wie FIG 9a (und FIG 9b im Detail) auch zeigt, ist in dem den Körper des Messrings 56 ausbildenden Messringgehäuse 76 ein (einziger) Temperatursensor 60 aufgenommen, nämlich ein Infrarot-Temperatursensor 16' - in einem linken Schenkel 88 des bildlich in Fig. 9a dargestellten Messrings 56. Im rechten Schenkel 90 des bildlich in Fig. 9a dargestellten Messrings 56 ist - schematisch angedeutet - ein Reflexionssensor 62 aufgenommen.

Ungeachtet dessen, können auch andere Halteeinrichtungen als der Messring 56 für den Temperatursensor 16'vorgesehen werden.

Der Temperatursensor 60 bzw. 16'ist mit einer Blende 54 ausgestattet.

Anders als bei vorbeschriebenem Messring 56 (nach FIG 7) ist dieser Temperatursensor 60 bzw. 16' hier - zu der Mittelachse 10 um einen Winkel α von ca. 45° schräggestellt - in dem Messringgehäuse 76 aufgenommen.

Über Leitungen (nicht dargestellt) ist der Temperatursensor 60 bzw. 16' sowie der Reflexionssensor 62 mit einen ebenfalls in dem Messring 56 bzw. in dessen Gehäuse 76 aufgenommenen Microcontroller 86 (mit Mess-/Recheneinheit 14, nicht sichtbar) verbunden, so dass Messsignale des Temperatursensors 60 bzw. 16' und des Reflexionssensors62 diesem zur Verarbeitung, hier insbesondere zur Ermittlung der Manteltemperatur eines in dem Kühlaufsatz 74 aufgenommenen Schrumpffutters 4 140, zugeführt werden.

Der Microcontroller 86 seinerseits ist (nicht sichtbar) über eine Zuleitung 84 mit einer Steuereinheit 28 bzw. - kurz mit einer Steuerung 28 - des Kühlgeräts 12 verbunden, an welche er seine Signale, wie die Manteltemperatur, überträgt.

Die Steuerung 28 kann dann in Abhängigkeit der aktuellen Manteltemperaturen einen Kühlvorgang 120 (bei einem in dem Kühlaufsatz 74 aufgenommenen Schrumpffutter 4) steuern 160.

Wie Fig. 9a auch zeigt, sieht der Messring 56 eine LED-(Wärme-)Statusanzeige 64 in Form zweier farbiger, an den Stirnseiten der beiden Schenkel 88, 90 angeordneter und so für einen Benutzer sichtbarer LED Leuchtdioden 82, 94 vor, von denen die eine rot 82, die andere grüne 94 ist und welche - ebenfalls über den Microcontroller 86 mit der Steuerung 28 verbunden - auch über die Steuerung 28 gesteuert werden.

Eine - leuchtende - grüne LED Leuchtdiode 94 zeigt einen Wärmezustand eines Schrumpffutters 4 an, das beispielsweise so stark abgekühlt ist, dass es mit der bloßen Hand gefahrlos berührt werden kann; eine - leuchtende - rote LED Leuchtdiode 82 zeigt einen Wärmezustand eines noch nicht (genügend) abgekühlten Schrumpffutters 4 an. Ein rotes Blinken der roten LED Leuchtdiode 82 weist auf einen aktiven Kühlvorgang durch die Kühlung 12 hin.

**Gegenstand bzw. Inhalt der** EP 3 557 945 B1**, welche auch zum Gegenstand der vorliegenden Anmeldung gemacht wird:**
Die Erfindung betrifft eine Schrumpfvorrichtung nach dem Oberbegriff des Anspruchs 1.

### Stand der Technik

Schrumpfvorrichtungen zum Ein- und Ausschrumpfen von Werkzeugschäften in Werkzeughalter sind seit geraumer Zeit bekannt. Ursprünglich wurden solche Schrumpfvorrichtungen mit einem Gasbrenner oder Heißluft betrieben, mittels derer die Hülsenpartie des Werkzeughalters heiß gemacht wurde, um sie so weit auf zu weiten, dass sie einen Werkzeugschaft im Presssitz aufnehmen kann oder diesen freigibt. In jüngerer Zeit haben Schrumpfvorrichtungen eine große Verbreitung gefunden, bei denen der jeweilige Werkzeughalter mithilfe einer Induktionsspule beheizt wird. Dies hat den Schrumpfprozess wesentlich beschleunigt, effizienter und leichter handhabbar gemacht und daher zu seiner weiten Verbreitung beigetragen.

Die erste für den praktischen Einsatz brauchbare Schrumpfvorrichtung wird in der Patentliteratur durch die deutsche Patentanmeldung DE 199 15 412 beschrieben.

Die bisher bekannten Schrumpfvorrichtungen sind noch nicht optimal automatisiert. Es können Fehler passieren, etwa ein zu langes induktives Beheizen der Hülsenpartie eines Werkzeughalters. Dies kann zur Folge haben, dass die Hülsenpartie des Werkzeughalters überhitzt wird. Die Hülsenpartie wird dann sozusagen ungewollt angelassen. Dies kann zu einer nachteiligen Gefügeveränderung führen. Die Hülsenpartie und damit der gesamte Werkzeughalter werden unter Umständen Ausschuss. Sofern die Hülsenpartie nicht sofort zum Ausschuss wird, besteht jedenfalls die Gefahr, dass sie rissig wird, wenn sie mehrfach überhitzt worden ist.

Man hat bereits versucht, hier Abhilfe zu schaffen, indem man die Temperatur der Hülsenpartie mit einem Infrarot-Detektor misst oder mit einem die Oberfläche der Hülsenpartie berührenden Taster. Beide Messarten sind aber fehlerbehaftet. Die Messung mit einem Infrarot-Detektor hängt stark davon ab, welche Farbe und Beschaffenheit die Hülsenpartie aufweist. Insbesondere nach längerem Gebrauch können die Hülsenpartien durchaus gewisse Anlassfarben zeigen, die die Temperaturmessung verfälschen. Schmutz und eventuelle Rückstände von Kühlschmiermittel tun ein Übriges.

Auch die berührenden Taster haben ihre Probleme. Denn hier hängt der Genauigkeit der Temperaturmessung unter anderem von der Kontaktintensität ab und ebenfalls davon, wie sauber die Oberfläche der Hülsenpartie jeweils ist.

Aus der deutschen Patentanmeldung DE 10 2005 042 615 ist der Gedanke bekannt, den vom Wechselrichter der Spule zugeführten Strom zu messen, um dadurch unmittelbar auf die der Spule zum Messzeitpunkt zugeführte Leistung zurück zu schlie-ßen. So wird es möglich, die Leistungsfähigkeit der in der Schaltung eingesetzten Module voll auszunutzen, ohne das Risiko einer Überlastung der Spule in Kauf nehmen zu müssen.

### Das der Erfindung zugrundeliegende Problem

Der Erfindung liegt daher das Problem zugrunde, eine Schrumpfvorrichtung bzw. ein Schrumpfverfahren anzugeben, das dazu in der Lage ist, die Wärmebelastung der Hülsenpartie zu beschränken und im Idealfall auf das Notwendige zu begrenzen.

### Die erfindungsgemäße Lösung gemäß Anspruch 1

Erfindungsgemäß wird ein Verfahren zur Überwachung der Temperatur der Hülsenpartie eines Werkzeughalters, die in die Induktionsspule eines Schrumpfgeräts eingebracht ist, vorgeschlagen, das sich durch folgende Merkmale auszeichnet: Es wird die momentane Induktivität der Induktionsspule während des induktiven Heizens gemessen und als Maß für die Erwärmung genommen. Die Stromzufuhr zur Induktionsspule wird beeinflusst, wenn die momentane Induktivität einen vorgegebenen Wert annähert, erreicht oder überschreitet. Im Regelfall erfolgt dann ein Abschalten der Stromzufuhr.

Das Heranziehen der momentanen Induktivität als Maß für die aktuelle Temperatur der Hülsenpartie hat den großen Vorteil, dass die bisher die Messungen verfälschenden Störgrößen, wie Farbe, Beschaffenheit und Reinheit der Oberfläche der Hülsenpartie völlig ausgeblendet werden. Gegenüber bisher verwendeten elektrischen Größen, wie etwa die Messung bzw. Errechnung der bis zu einem gewissen Zeitpunkt aufgebrachten elektrischen Energie, hat die Messung der momentanen Induktivität den Vorteil, dass sie deutlich genauer ist. Somit wird das Schrumpffutter nicht immer zum Maximalwert bzw. über eine maximale Zeit hinweg erhitzt, sondern es wird passgenau Leistung induziert, was ferner zu einer Schonung des Schrumpffutters führt und ggf. das Wiederabkühlen beschleunigt.

Erfindungsgemäß ist vorgesehen, dass für einen oder mehrere Werkzeughalter mit unterschiedlichen Hülsenpartien gemessen und gespeichert wird, welche momentane Induktivität die Induktionsspule erreicht, wenn die in die Induktionsspule eingebrachte Hülsenpartie soweit erwärmt ist, dass ein- oder ausgeschrumpft werden kann

Dann wird zu Beginn eines neuen Schrumpfvorgangs abgefragt, welcher Werkzeughalter zum Ein- oder Ausschrumpfen in die Induktionsspule eingesetzt worden ist. Auf diese Abfrage an das System oder den Bediener kann der Benutzer das eingeben, oder es wird automatisch vom System erkannt. Dadurch kann für diesen Werkzeughalter ausgelesen werden, welche Induktivität das System Hülsenpartie/Induktionsspule hat, wenn die Hülsenpartie die gewünschte Temperatur hat, um dann den induktiven Heizvorgang zu starten.

Erfindungsgemäß wird der Aufheizzyklus beendet, wenn eine momentane Induktivität gemessen wird, die der gespeicherten Induktivität entspricht, die die Hülsenpartie dieses Werkzeughalters aufweist, wenn sie zum Ein- oder Ausschrumpfen bereit ist.

### Weitere Gestaltungsmöglichkeiten

Es ist eine weitere Aufgabe der Erfindung, eine Schrumpfvorrichtung anzugeben, die wesentlich kompakter ist als die bisher bekannten Schrumpfvorrichtungen und die daher einen geeigneten Ausgangspunkt bildet, um eine Schrumpfvorrichtung für den mobilen Einsatz zu konzipieren - idealerweise derart, dass die Schrumpfvorrichtung ein nach Art eines kleinen Koffers zu transportierendes Gerät ist, welches vom Bediener neuartig verwendet werden kann, indem es kurzerhand an die einem Werkzeugwechsel zu unterziehende Werkzeugmaschine gebracht und dort eingesetzt wird, um vor Ort an der Maschine einen Werkzeugwechsel vorzunehmen.

Dies schließt selbstverständlich nicht aus, dass die Schrumpfvorrichtung auch in herkömmlicher Weise stationär an einer entsprechenden Haltevorrichtung verwendet werden kann, die mobile Verwendung ist jedoch bevorzugt.

Die Lösung dieses Problems erfolgt durch eine Schrumpfvorrichtung zum Ein- und Ausspannen von einen Werkzeugschaft aufweisenden Werkzeugen, wie im Anschluss an den Hauptanspruch beschrieben.

Die Schrumpfvorrichtung umfasst eine Werkzeugaufnahme, die eine an ihrem freien Ende offene Hülsenpartie aus elektrisch leitendem Werkstoff zur reibschlüssigen Aufnahme des Werkzeugschafts aufweist.

Darüber hinaus gehört zu der Schrumpfvorrichtung eine die Hülsenpartie der Werkzeugaufnahme umfassende, mit einem vorzugsweise hochfrequenten (und idealerweise mit einer Frequenz von meist mehr als 1 kHz aufweisenden) Wechselstrom beaufschlagte, als Ring- oder Zylinderspule ausgebildete Induktionsspule zum Erwärmen der Hülsenpartie. Dabei trägt die Induktionsspule an ihrem Außenumfang einen ersten Mantel aus magnetisch leitfähigem und elektrisch nicht leitfähigem Material, etwa aus Ferrit oder aus einem Metallpulverwerkstoff. Elektrisch nicht leitfähiges Material im Sinne der Erfindung muss nicht unbedingt ein Isolator sein. Ein Material gilt dann als nichtleitend, wenn die durch Magnetfelder induzierten Wirbelströme nur eine geringfügige oder keine Erwärmung im Material verursachen.

Bestandteil der erfindungsgemäßen Schrumpfvorrichtung sind darüber hinaus Leistungshalbleiterbauelemente zur Herstellung eines die Induktionsspule speisenden Wechselstroms.

Typischerweise kommen hier sogenannte IGBT zum Einsatz. Es können aber auch Thyristoren oder MOSFET verwendet werden. Zu der erfindungsgemäßen Schrumpfvorrichtung gehört auch ein im Regelfall aus Kunststoff bestehendes Induktionsspulengehäuse. Ein solches Induktionsspulengehäuse entfaltet typischerweise keinerlei oder zumindest keine spürbare magnetische Abschirmwirkung. Es dient allein dazu, die in ihm befindlichen Bauteile vor Einflüssen von außen zu schützen und zugleich zu verhindern, dass die Bedienungsperson womöglich mit Spannung führenden Teilen in Kontakt kommen kann.

Die erfindungsgemäße Schrumpfvorrichtung zeichnet sich dadurch aus, dass die Induktionsspule und ihr erster Mantel am Außenumfang von einem zweiten Mantel umgeben sind. Dieser zweite Mantel besteht aus magnetisch nicht leitfähigem und elektrisch leitfähigem Material. Er ist so ausgelegt, dass ein etwaiges Streufeld elektrische Ströme in ihm induziert und so dem Streufeld Energie entzieht und es damit schwächt. Das bedeutet, dass er das in seiner Umgebung befindliche Streufeld total eliminiert oder zumindest soweit herabsetzt, dass der in seiner unmittelbaren Umgebung nun noch vorhandene Rest des Streufeldes - vorzugsweise ohne weitere Maßnahmen oder stattdessen im Verbund mit weiteren, flankierenden Maßnahmen - so gering ist, dass es keinen negativen Einfluss auf dort angeordnete Leistungshalbleiterbauelemente ausübt.

Weiterhin zeichnet sich diese erfindungsgemäße Lösung dadurch aus, dass zumindest die Leistungshalbleiterbauelemente gemeinsam mit der Induktionsspule in einem Induktionsspulengehäuse untergebracht sind. Das Induktionsspulengehäuse besteht vorzugsweise aus isolierendem Material oder ist außenseitig mit einem solchen überzogen.

Es umfasst umfangsseitig bzw. beherbergt in seinem Inneren folgende Bauteile: Die Induktionsspule, deren ersten und deren zweiten Mantel, sowie zumindest die Leistungshalbleiterbauelemente, vorzugsweise auch die unmittelbar im Leistungskreis liegenden Kondensatoren und/oder die Steuerung.

Unter einem "Umfassen" wird als Minimum ein außen Umschließen zumindest entlang des Umfangs der Induktionsspule verstanden. Im Regelfall wird das Induktionsspulengehäuse auch bis in den Bereich der oberen und unteren Stirnseite greifen und diese ganz oder teilweise abdecken. Es besitzt dann eine topfartige Gestalt. Das Induktionsspulengehäuse besitzt, zumindest an seinem Umfang, im Regelfall keine Wanddurchbrüche - außer etwa einem der Funktion geschuldeten lokalen Durchbruch, also für die Zuleitung o. ä.

### Weitere Gestaltungsmöglichkeiten

Vorzugsweise ist die Schrumpfvorrichtung so gestaltet, dass ihre Leistungshalbleiterbauelemente unmittelbar am Außenumfang des zweiten Mantels angeordnet sind. Unmittelbar am Außenumfang kann "mit etwa bis zu 60 mm, besser nur mit bis zu 15 mm maximalem radialen Abstand von der Außenumfangsfläche des zweiten Mantels der Induktionsspule angeordnet" bedeuten. Falls dieser fehlt, ist die Außenumfangsfläche des ersten Mantels maßgeblich.

Idealerweise stehen die Leistungshalbleiterbauelemente aber mit mindestens einer ihrer Oberflächen mit dem zweiten Mantel in direktem wärmeleitenden Kontakt, allenfalls unter Vermittlung einer Klebstoffschicht. Der zweite Mantel ist vorzugsweise so gestaltet, dass er einen Kühlkörper für die Leistungshalbleiterbauelemente bildet. Der zweite Mantel nimmt dann die in den Leistungshalbleiterbauelementen entstehende Verlustwärme auf und führt sie von diesen ab.

Als besonders günstig hat es sich erwiesen, wenn der zweite Mantel eine oder bevorzugt mehrere Aussparungen besitzt, die jeweils ein Leistungshalbleiterbauelement aufnehmen, bevorzugt so, dass das Halbleiterbauelement jeweils zumindest drei- oder besser vierseitig von dem zweiten Mantel umschlossen ist. Eine solche Aussparung in dem zweiten Mantel bildet einen Bereich, der vor dem restlichen womöglich noch vorhandenen magnetischen Streufeld besonders geschützt ist. Denn die Streufeldlinien vermögen in diese tiefer liegende Aussparung, in der sich das Leistungshalbleiterbauelement befindet, nicht einzudringen. Sie werden stattdessen von den umliegenden, höher bzw. weiter radial auswärtig liegenden Bereichen des zweiten Mantels eingefangen.

Als besonders günstig hat es sich erwiesen, wenn die Schrumpfvorrichtung, die zumindest einen Gleichrichter und zumindest einen Glättungskondensator sowie Schwingkreiskondensatoren umfasst, die an der vorrichtungsinternen Herstellung einer hochfrequenten Wechselspannung zum Speisen der Induktionsspule beteiligt sind, eine Induktionsspule besitzt, um deren Außenumfang herum die Kondensatoren gruppiert sind - im Regelfall so, dass die Kondensatoren, wenn man sie gedanklich um das Zentrum der Spule rotieren lässt, einen Zylinderring bilden, der die Induktionsspule umschließt. Auch hier ist es so, dass die Kondensatoren unmittelbar am Außenumfang des zweiten Mantels der Induktionsspule angeordnet sein sollten.

Dabei kann man in diesem Zusammenhang unter dem Begriff "unmittelbar am Außenumfang" einen maximalen radialen Abstand von bis zu 125 mm verstehen, vorzugsweise von bis zu 40 mm, gemessen vom Außenumfang des zweiten Mantels der Induktionsspule. Falls dieser fehlt, ist die Außenumfangsfläche des ersten Mantels maßgeblich.

Eine besonders günstige Ausführungsform der Schrumpfvorrichtung, für die nicht nur abhängiger, sondern auch selbstständiger, nicht von vorangehenden Ansprüchen abhängiger Schutz beansprucht wird, besteht zumindest aus einer Induktionsspule zum Ein- und Ausschrumpfen von Werkzeugschäften aus Werkzeughaltern, die von einem ersten Mantel umgeben ist, der aus magnetisch leitfähigem und elektrisch nicht leitfähigem Material besteht, wobei die Induktionsspule und ihr erster Mantel von einem zweiten Mantel umgeben sind, der aus magnetisch nicht leitfähigem und elektrisch leitfähigem Material besteht.

Für den zweiten Mantel gilt das bereits zuvor Gesagte. Idealerweise ist dieser zweite Mantel auch hier so ausgelegt, dass in ihm unter dem Einfluss eines ihn durchdringenden Streufeldes der Induktionsspule Wirbelströme erzeugt werden, die an der Außenoberfläche des zweiten Mantels zu einer Beseitigung des Streufeldeinflusses führen. Hier kann man sich gegebenenfalls das Prinzip der sogenannten Gegeninduktion zu Nutze machen. In dem zweiten Mantel werden durch das ihn durchdringende Streufeld Wirbelströme erzeugt, die ihrerseits ein Gegenfeld aufbauen, das das störende Streufeld beseitigt, zumindest soweit, dass im Nahbereich des zweiten Mantels Leistungshalbleiterbauelemente untergebracht werden können, ohne dauerhaft Schaden zu nehmen.

Eine andere besonders günstige Ausführungsform der Schrumpfvorrichtung, für die nicht nur abhängiger, sondern auch selbstständiger, nicht von vorangehenden Ansprüchen abhängiger Schutz beansprucht wird, besteht aus einer Induktionsspule zum Ein- und Ausschrumpfen von Werkzeugen aus Werkzeughaltern, die zusammen mit den ihr zugeordneten, zum Herstellen der die Induktionsspule speisenden, ggü. der Netzspannung umgewandelten Wechselspannung erforderlichen Leistungshalbleiterbauelementen im Induktionsspulengehäuse untergebracht ist, das sie umgibt.

Vorzugsweise sind auch noch weitere Bauteile, wie etwa im Leistungskreise liegende Kondensatoren und/oder ein Gleichrichter und/oder ein Trafo und/oder die elektronische Steuerung innerhalb des Induktionsspulengehäuses untergebracht. Ein zweiter Mantel ist bei dieser Ausführungsform nicht vorhanden. Er kann ggf. dadurch substituiert werden, dass die Leistungshalbleiterbauelemente und/oder die Steuerelektronik und/oder die Gleichrichter ihrerseits jeweils geschirmte Gehäuse besitzen oder in geschirmten Compartments untergebracht sind. Dabei sind vorzugsweise zumindest die Leistungshalbleiterbauelemente aktiv gekühlt, etwa mit Hilfe der Kühlmittelversorgung der Werkzeugmaschine.

Dieser Weg ist mit höherem Aufwand möglich und wird daher in das Schutzbegehren eingeschlossen.

Auf diese Art und Weise erhält man eine besonders kompakte Schrumpfvorrichtung, die nicht mehr auf einen separaten, neben der Schrumpfvorrichtung stehenden, mehr oder minder großen Schaltschrank angewiesen ist, in dem diese Bauteile separat untergebracht sind. Damit kommt man dem Ziel nach einem mobilen Schrumpfgerät ein gutes Stück näher.

Vorzugsweise sind alle Varianten der erfindungsgemäßen Schrumpfvorrichtung so gestaltet, dass die der Werkzeugaufnahme abgewandte Stirnseite der Induktionsspule mit einer Abdeckung aus magnetisch leitfähigem und elektrisch nicht leitfähigem Material versehen ist. Idealerweise ist diese Abdeckung als ein derartiger Polschuh ausgebildet, der die gesamte Stirnfläche der Induktionsspule vollflächig überdeckt. Das ist hier besonders wichtig, um den Außenraum von einem schädlichen Streufeld freizuhalten. In Ausnahmefällen gilt, dass die Abdeckung die gesamte Stirnfläche der Induktionsspule wenn nicht physisch, dann aber magnetisch vollflächig überdeckt.

Als besonders günstig hat es sich erwiesen, wenn die Abdeckung örtlich, im Zentrum nahe der Hülsenpartie, einen Abschirmkragen aufweist, der in Richtung der Längsachse L vorzugsweise um mindestens den zweifachen Betrag des Werkzeugdurchmessers über die freie Stirnseite der Hülsenpartie des Werkzeughalters aufragt. Ein solcher Abschirmkragen verhindert, dass der der Hülsenpartie nahe Werkzeugschaft einem schädlichen Streufeld ausgesetzt ist bzw. Ausgangspunkt für ein solches Streufeld ist, das sich von dort aus in die Umgebung erstreckt und den zu vermeidenden schädlichen Einfluss auf die im unmittelbaren Nahbereich der Induktionsspule angeordneten Leistungshalbleiterbauelemente ausübt.

Günstig ist es, wenn auch die der Werkzeugaufnahme zugewandte Stirnseite der Induktionsspule durch ein magnetisch leitendes und elektrisch nicht leitendes Material übergriffen und vorzugsweise bis auf die Aufnahmeöffnung für den Werkzeughalter vollständig abgedeckt wird.

Im Rahmen einer besonders bevorzugten Ausführungsform ist vorgesehen, dass die Schrumpfvorrichtung mindestens eine elektrische Platine besitzt, die unmittelbar am Außenumfang der Induktionsspule angeordnet ist oder den Außenumfang der Induktionsspule vorzugsweise nach Art eines in Umfangsrichtung überwiegend oder vollständig in sich geschlossenen Rings umgreift und die im Leistungskreis liegenden Kondensatoren und/oder die Leistungshalbleiterbauelemente elektrisch kontaktiert. Als Platine wird hier vorzugsweise eine etwa mindestens 0,75 mm dicke Platte mit darauf aufgebrachten Leiterbahnen aus metallischem Material verstanden, alternativ kann aber auch eine mit metallischen Leiterbahnen versehene Folie zum Einsatz kommen.

Besonders günstig ist es, wenn die Platine eine Platinenringscheibe ist, deren Rotationssymmetrieachse bevorzugt koaxial, ansonsten parallel zur Längsachse der Induktionsspule verläuft.

Im Idealfall sind zwei Platinenringscheiben vorhanden, zwischen denen entlang des Umfangs der Induktionsspule die im Leistungskreis liegenden Kondensatoren angeordnet sind.

Im Rahmen eines besonders bevorzugten Ausführungsbeispiels ist vorgesehen, dass der zweite Mantel einen oder mehrere Kühlkanäle bildet, die vorzugsweise in seinem Inneren verlaufen, wenn man den zweiten Mantel als Ganzes betrachtet. Zu diesem Zweck kann der zweite Mantel zwei- oder mehrteilig ausgeführt sein. Die einzelnen Teile des Mantels sind dann gegeneinander abgedichtet. Dies vereinfacht die Fertigung innenliegender Kühlkanäle wesentlich.

Eine andere besonders günstige Ausführungsform der Schrumpfvorrichtung, für die nicht nur abhängiger, sondern auch selbstständiger, nicht von vorangehenden Ansprüchen abhängiger Schutz beansprucht wird, ist eine Schrumpfvorrichtung, die sich dadurch auszeichnet, dass die Schrumpfvorrichtung eine Kupplung zum Befestigen der Schrumpfvorrichtung an der Aufnahme einer Werkzeugmaschinenspindel aufweist. Auch mit dieser Ausgestaltung kommt man dem Ziel, eine praxistauglich einsetzbare mobile Schrumpfvorrichtung zu schaffen, wesentlich näher. Denn es ist gefährlich, mit einem mobilen Schrumpfgerät zu arbeiten, das nur irgendwie in der Nähe der Werkzeugmaschine frei liegt, ohne irgendwie betriebssicher befestigt zu sein.

Dieses Problem entfällt mit der erfindungsgemäßen Kupplung. Die Kupplung ermöglicht es, die Schrumpfvorrichtung nach dem Ausbau des einem Werkzeugwechsel zu unterwerfenden Schrumpffutters an dessen Stelle an der Maschinenspindel zu befestigen. Hier wird die Schrumpfvorrichtung für die Dauer ihres Betriebs sicher gehalten und kann anschließend schnell wieder abgekoppelt und entfernt werden.

Die Kupplung kann in einer Variante auch dazu verwendet werden, um die Schrumpfvorrichtung im Werkzeugmagazin der Werkzeugmaschine aufzubewahren. Aus dem Magazin heraus kann sie durch den Werkzeugwechsler automatisch in die Maschinenspindel eingesetzt werden.

In einer weiteren Variante kann der Werkzeugwechsler die Schrumpfvorrichtung aus dem Werkzeugmagazin herausholen, aber nicht, um sie in die Maschinenspindel einzusetzen, sondern um sie direkt an eine in der Maschinenspindel eingespannte Schrumpfaufnahme heranzuführen und das Werkzeug ein- oder aus zu schrumpfen. Auch hierzu ist die der Schrumpfvorrichtung eigene Kupplung besonders vorteilhaft.

Idealerweise ist die Schrumpfvorrichtung zudem so beschaffen, dass sie dann, wenn sie eine interne Kühlung aufweist, durch das Kühlsystem der Werkzeugmaschine mit Kühlmittel gespeist werden kann.

Besonders zweckmäßig ist es, die Schrumpfvorrichtung so zu gestalten, dass die Induktionsspule mit ihrem ersten und, soweit vorhanden, mit ihrem zweiten Mantel und mindestens mit den Leistungshalbleiterbauelementen und/oder den Kondensatoren und/oder idealerweise auch die Elektronik zum Ansteuern der Leistungshalbleiterbauelemente im Inneren eines Spulengehäuses oder Spulengehäuserings untergebracht ist, der oder das zumindest den Umfang der Induktionsspule umschließt und vorzugsweise auch eine, besser beide Stirnseiten der Induktionsspule zumindest teilweise übergreift. Auf diese Art und Weise ergibt sich eine kompakte Einheit, in der gegebenenfalls alle betriebsnotwendigen Bauteile untergebracht sind und die durch das gemeinsame Gehäuse gegen Einflüsse von au-ßen geschützt werden und zuverlässig vor einer Berührung spannungführender Teile durch den Bediener abgeschirmt sind.

Idealerweise ist das Spulengehäuse mit einem Stecker, typischerweise einem Schukostecker (vorzugsweise in Gestalt eines am Ende einer flexiblen Zuleitung befestigten Steckers), zum unmittelbaren Einspeisen von einphasiger Netzwechselspannung aus dem öffentlichen Netz (vorzugsweise 110 V oder 230 V) versehen.

Dies gestattet es, die Schrumpfvorrichtung nahezu überall zu betreiben. Es wird lediglich eine der für Elektrogeräte üblichen Steckdosen benötigt und ggf. ein übliches Verlängerungskabel. Es versteht sich, dass die Erfindung nicht zwingend auf diese besonders bevorzugte Art der Stromversorgung beschränkt ist. Die Stromversorgung kann auch 3-phasig und mit anderen Spannungen erfolgen, je nachdem, welche Leistung im Einzelfall notwendig ist und welche Stromversorgung am jeweiligen Standort zur Verfügung steht. Natürlich sind auch andere Spannungen möglich, insbesondere in Ländern, die eine andere Netzspannung im öffentlichen Netz verwenden.

Alternativ hat es sich als besonders günstig erwiesen, die Schrumpfvorrichtung mit einer Batterie zu versehen, die sie speist. Auch ein solches Gerät kann hochmobil sein. Es bietet sich dann an, ein Fahrgestell, etwa nach Art einer sehr wendigen Sackkarre, vorzusehen, das im unteren Bereich die Batterie trägt, etwa eine Fahrzeug-Starter Batterie, und beispielsweise in seinem oberen Bereich die Schrumpfvorrichtung bereithält.

Darüber hinaus wird auch Schutz für ein gesamtes Schrumpfsystem beansprucht, das aus einer Schrumpfvorrichtung der erfindungsgemäßen Art besteht und das sich dadurch auszeichnet, dass zu dem Schrumpfsystem zusätzlich unterschiedliche, an der Schrumpfvorrichtung befestigbare Kupplungen gehören, mittels derer die Schrumpfvorrichtung an der Spindel einer Werkzeugmaschine festgesetzt werden kann.

Dies gestattet es, die Schrumpfvorrichtung an unterschiedlich ausgerüsteten Werkzeugmaschinenspindeln zu befestigen, sodass es nicht mehr darauf ankommt, ob die Werkzeugmaschinenspindel zum Einziehen beispielsweise einer HSK Kupplung oder einer Steilkegelkupplung ausgerüstet ist.

Weitere Ausgestaltungsmöglichkeiten, Wirkungsweisen und Vorteile sind der nachfolgend unter Zuhilfenahme der Figuren vorgesehenen Beschreibung der Ausführungsbeispiele zu entnehmen.

Zwischen dem ersten und zweiten Mantel ist vorzugsweise ein Zwischenmantel verortet. Dieser dient vorzugsweise als kühlmittelführendes Element, um den zweiten Mantel bzw. die darauf angebrachten Halbleiterelemente vor Überhitzung zu schützen. Im Gegensatz zum zweiten Mantel ist es dabei vorzugsweise nicht gespalten, um eine einfache Kühlmittelführung zu gewährleisten. Daher ist der Zwischenmantel entweder zumindest gegenüber dem zweiten Mantel elektrisch (nicht thermisch) isoliert oder er besteht von vornherein aus elektrisch nicht leitendem Material. Es versteht sich von selbst, dass die Kühlmittelführung gegenüber den anderen Bauteilen der Schrumpfvorrichtung abgedichtet ist. Alternative Konzepte zur Kühlung des zweiten Mantels ohne einen besonders ausgebildeten Zwischenring sind denkbar.

Natürlich kann dieser Zwischenmantel auch so ausgebildet sein, dass er ergänzend als (zusätzliche) Abschirmung dient.

### Figurenliste

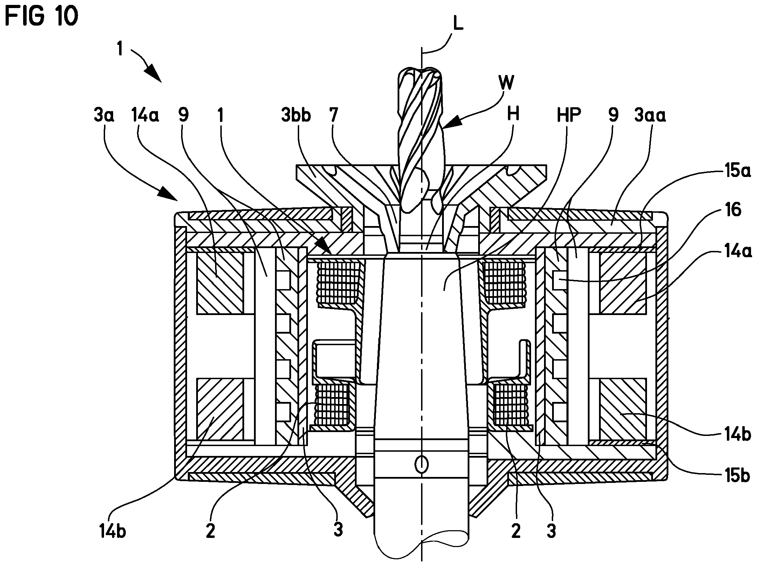

Die Figur 10 zeigt ein erstes Ausführungsbeispiel im Mittel-Längsschnitt.

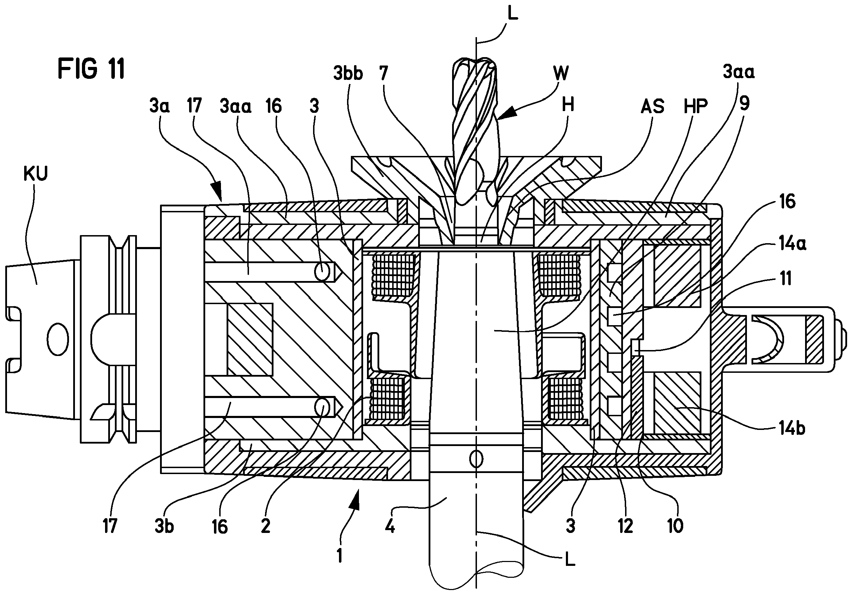

Die Figur 11 zeigt das erste Ausführungsbeispiel in einem Mittel-Längsschnitt, der im Vergleich zur Figur 10 um 90° um die Längsachse L gedreht ausgeführt ist.

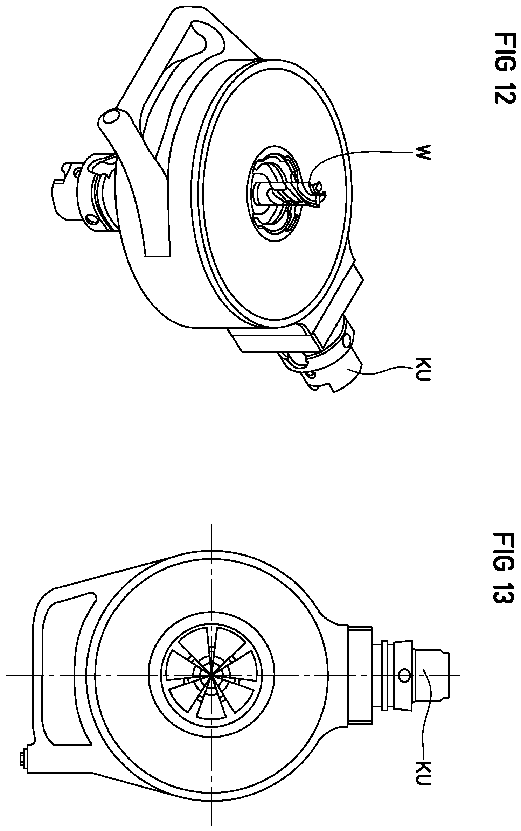

Die Figur 12 zeigt das erste Ausführungsbeispiel in perspektivischer Ansicht schräg von oben, bei abgenommenem Abschirmkragen.
Die Figur 13 zeigt das erste Ausführungsbeispiel frontal von oben, mit aufgesetztem Abschirmkragen.

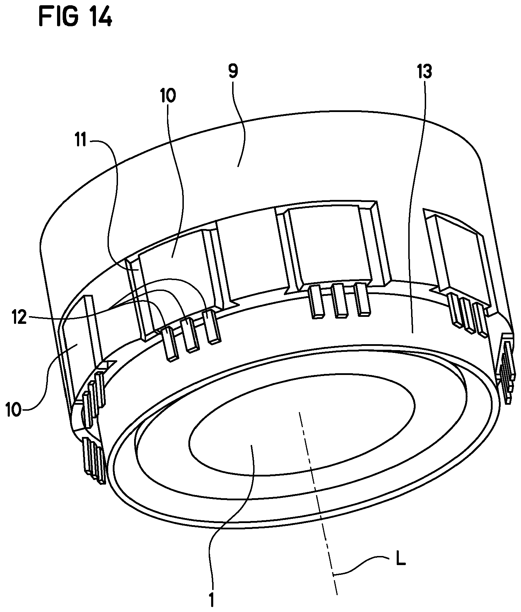

Die Figur 14 zeigt den zweiten Mantel des ersten Ausführungsbeispiels, ausgerüstet mit Leistungshalbleiterbauelementen.

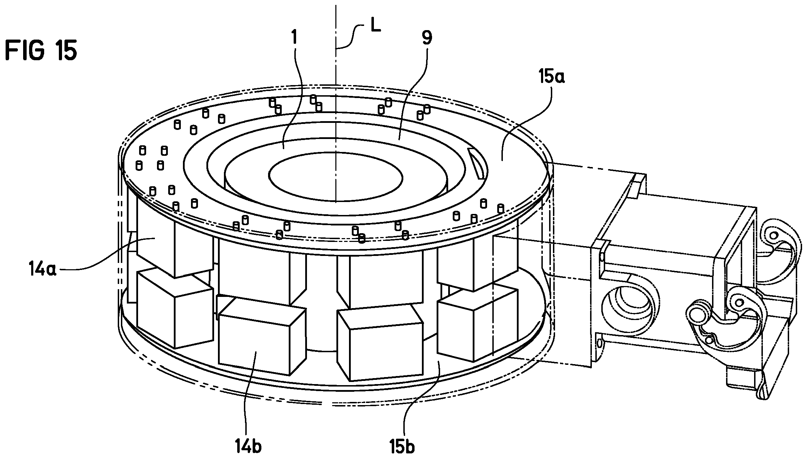

Die Figur 15 zeigt ein zweites Ausführungsbeispiel, das sich vom ersten Ausführungsbeispiel aber nur durch die Art der Befestigung an der Werkzeugmaschine oder am Stativ unterscheidet und insofern im Hinblick auf die Anordnung der Kondensatoren und der Platinen bzw. Leiterplatten, die hier gezeigt wird, mit dem ersten Ausführungsbeispiel identisch ist.

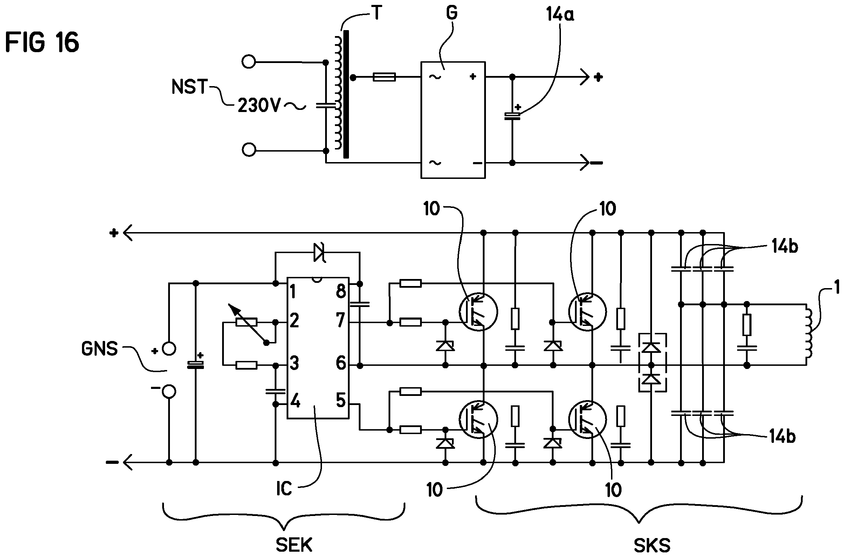

Die Figur 16 zeigt den Schaltplan einer Schaltung zum Speisen der Induktionsspule, die erfindungsgemäß für die Ausführungsbeispiele zum Einsatz kommen kann.

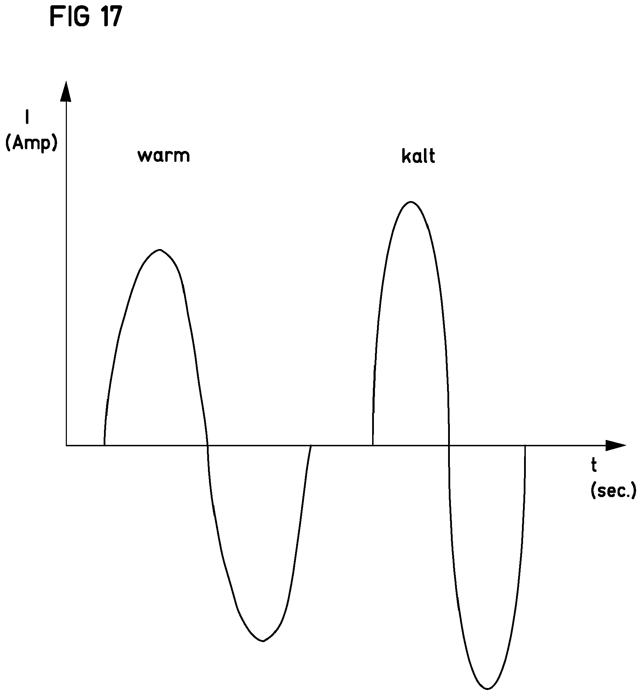

Die Figur 17 zeigt die unterschiedliche Flanken-Steilheit, die ein Maß für die Induktivität ist.

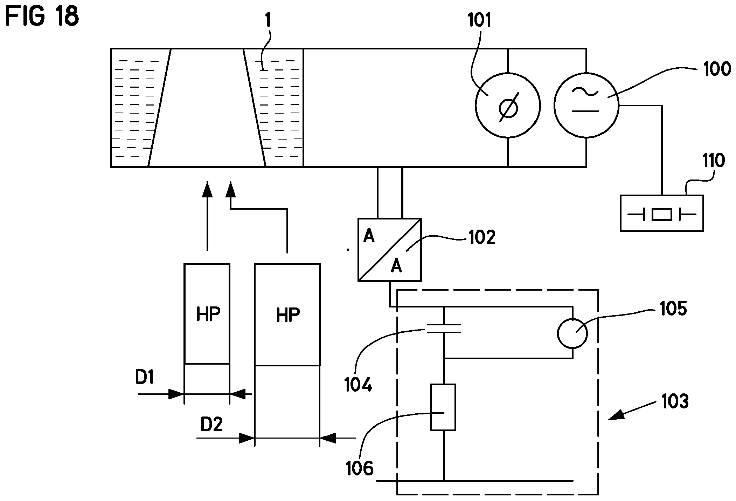

Die Figur 18 zeigt eine Schaltungsanordnung, wie sie erfindungsgemäß zum Einsatz kommen kann, um die Induktivität zu messen und gegebenenfalls auch die Geometrie der Hülsenpartie automatisch zu bestimmen.

### Ausführungsbeispiele

Die Figur 10 gibt einen ersten grundlegenden Überblick über die erfindungsgemäße Vorrichtung.

### Das Grundprinzip des induktiven Ein- und Ausschrumpfens

Gut zu erkennen ist hier die Induktionsspule 1 mit ihren einzelnen Windungen 2, in deren Zentrum ein Werkzeughalter 4 eingeschoben wird, um den Halteschaft H eines Werkzeugs W in die Hülsenpartie HP ein- oder aus zu schrumpfen. Das Funktionsprinzip, das dem Ein- und Ausschrumpfen zugrunde liegt, ist näher in der deutschen Patentanmeldung DE 199 15 412 A1 beschrieben. Deren Inhalt wird hiermit zum Gegenstand dieser Anmeldung gemacht.

### Die Abschirmung der Induktionsspule mit magnetisch leitenden und elektrisch nicht leitenden Mitteln

Die vorliegende Erfindung stellt hohe Anforderungen an die Abschirmung der Induktionsspule, auch an die konventionelle, ihrer Art nach bereits bekannte Abschirmung.

An ihrem Außenumfang ist die Induktionsspule mit einem ersten Mantel 3 aus elektrisch nicht leitendem und magnetisch leitendem Material versehen. Typischerweise besteht der erste Mantel 3 entweder aus einem Ferrit oder einem Metallpulver bzw. Metallsinterwerkstoff, dessen einzelne Partikel elektrisch isolierend voneinander getrennt sind und die auf diese Art und Weise insgesamt gesehen magnetisch leitend und elektrisch nicht leitend sind. Um patentrechtlich motivierte Umgehungsversuche auszuschließen, sei gesagt, dass in Ausnahmefällen stattdessen auch ein geblechter Mantel aus geschichteten Transformatorenblechen denkbar ist, die untereinander durch isolierende Lagen getrennt sind. In der überwiegenden Zahl der Fälle wird ein solcher geblechter Mantel aber den gewünschten Zweck nicht erfüllen.

Besonders bevorzugt ist der erste Mantel 3 so ausgeführt, dass er in Umfangsrichtung völlig in sich geschlossen ist, also die Umfangsfläche der Spule vollständig überdeckt, so dass auch in der Theorie keinerlei "magnetische Lücken" verbleiben, abgesehen von irrelevanten lokalen Durchbrüchen, wie etwa einzelnen und/oder kleinen lokalen Bohrungen o. ä.

Im Ausnahmefall ist es denkbar, den Mantel 3 so auszuführen, dass er aus einzelnen, den Umfang abdeckenden Segmenten besteht, die zwischen sich gewisse Freiräume aufweisen - nicht figürlich dargestellt. Derartiges kann im Einzelfall mehr schlecht als recht funktionieren, wenn die radiale Dicke der einzelnen Segmente in Relation zu der Dimension der Freiräume so groß gewählt ist, dass das von innen her in den jeweiligen Freiraum eintretende Feld von den Segmenten noch im Bereich des Freiraums angezogen wird und dadurch kein nennenswertes Streufeld die Freiräume passieren kann.

Vorzugsweise hat die Abschirmung aus magnetisch leitendem und elektrisch nicht leitendem Material mit dem ersten Mantel nicht bereits ihr Bewenden.

Stattdessen schließt sich an mindestens einer, besser beiden, Stirnseiten des ersten Mantels 3 eine magnetische Abdeckung 3a, 3b aus dem besagten Material an, die im Regelfall den ersten Mantel 3 kontaktieren.

Auf der dem Werkzeughalter abgewandten Stirnseite der Induktionsspule ist die magnetische Abdeckung 3a vorzugsweise als ganz oder bevorzugt abschnittweise auswechselbarer Polschuh ausgebildet, d. h. als ringförmiges Gebilde mit einer zentralen Öffnung, die einen Durchlass für das ein- oder auszuspannende Werkzeug bildet. Der Begriff "auswechselbar" beschreibt vorzugsweise eine werkzeuglose Auswechselbarkeit, die idealerweise mit Hilfe einer mit bloßer Hand betätigbaren Verbindung realisiert wird, etwa einer Bajonettverbindung. Auf diese Art und Weise können Werkzeughalter bearbeitet werden, die unterschiedlich große Werkzeugschaftdurchmesser aufnehmen. Dennoch ist gewährleistet, dass die Stirnseite der jeweiligen Hülsenpartie HP auf der Spuleninnenseite zur Anlage gegen den Polschuh gelangt.

Auf der dem Werkzeughalter zugewandten Stirnseite der Induktionsspule ist die magnetische Abdeckung 3b vorzugsweise als in sich ebene Ringscheibe ausgestaltet, die die Wicklungen der Induktionsspule idealerweise vollständig übergreift und einen zentralen Durchlass für die Hülsenpartie aufweist.

Für die Erfindung ist es zwar nicht obligatorisch, aber in höchstem Maße vorteilhaft, wenn die stirnseitig vorgesehenen magnetischen Abdeckungen 3a, 3b (zumindest lokal, vorzugsweise zu mindestens 75%, idealerweise vollständig rundum) in radialer Richtung über den ersten Mantel 3 hinausragen, vorzugsweise um ein Radialmaß, das die radiale Dicke des ersten Mantels 3 um ein Vielfaches übertrifft, in vielen Fällen um mindestens das 4-fache. Der radiale Überstand sollte vorzugsweise unter einem Winkel von 75° bis idealerweise 90° zur Längsachse L verlaufen. Auf diese Art und Weise entsteht ein in Umfangsrichtung um die Spule herumlaufender, verstärkt "geschirmter Graben", dessen erfindungsgemäße Funktion später noch näher erläutert wird.

Figur 10 zeigt eine besonders bevorzugte Ausführungsform, bei der der Polschuh aus einer dauerhaft an Ort und Stelle verbleibenden Polringscheibe 3aa besteht, die außenseitig mit einem isolierenden Material belegt ist, beispielsweise Kunststoff. An der Polringscheibe 3aa ist auswechselbar ein Abschirmkragen 3ab befestigt. Wie man sieht, stehen die Polringscheibe 3aa und der Abschirmkragen 3ab vorzugsweise ohne magnetische Unterbrechung miteinander in Verbindung. Dies wird dadurch erreicht, dass der Abschirmkragen die Polringscheibe kontaktiert, vorzugsweise indem er von oben her auf ihr aufliegt.

Wie die Figur 10 ebenfalls zeigt, kann es besonders günstig sein, wenn der Abschirmkragen einen Anschlagabschnitt AS zur Anlage an der Hülsenpartie aufweist, der bis in das Innere der Induktionsspule hineinragt.

Wie man ebenfalls gut anhand der Figur 10 sieht, ist es in vielen Fällen besonders günstig, wenn der Abschirmkragen in einzelne Segmente aufgeteilt ist, die schräg mit einer Bewegungskomponente in radialer und einer Bewegungskomponente in Richtung parallel zur Längsachse L verschiebbar sind - so dass sowohl der freie Innendurchmesser des Abschirmkragens verstellbar ist, der als Werkzeugdurchlass zur Verfügung steht, als auch die Tiefe, mit der das der Hülsenpartie zugewandte stirnseitige Ende des Abschirmkragens in das Innere der Induktionsspule eintaucht.

Idealerweise weist der Abschirmkragen jedenfalls eine kegelförmige Gestalt bzw. einen sich in Richtung der Spulenlängsachse zur Werkzeugspitze hin erweiternden Verlauf auf.

Um die für den erfindungsgemäßen Zweck wünschenswerte, qualitativ besonders hochwertige Abschirmung zu gewährleisten, ragt der Abschirmkragen in Richtung der Längsachse L um mindestens den zweifachen, besser um mindestens den 2,75-fachen Betrag des Werkzeugdurchmessers über die freie Stirnseite der Hülsenpartie des Werkzeughalters auf.

### Die zusätzliche Abschirmung mit einem elektrisch leitenden und magnetisch nicht leitenden Mittel

Auch eine sorgfältige Abschirmung mithilfe des ersten Mantels 3 und den magnetischen Abdeckungen 3a, 3b vermag nicht zu verhindern, dass am Außenumfang der Induktionsspule bzw. an oder im Bereich der Umfangsoberfläche des ersten Mantels 3 noch ein gewisses, für Halbleiterbauteile schädliches Streufeld anzutreffen ist. Aufgrund dessen verbietet es sich eigentlich, in diesem Bereich elektronische Bauteile anzuordnen, die empfindlich auf durch das Streufeld induzierte Störspannungen reagieren. So, wie das insbesondere bei Halbleiterbauteilen der Fall ist, die einen maßgeblichen Teil des in Resonanznähe betriebenen Schwingkreises bilden, der zur Speisung der Induktionsspule eingesetzt wird.

Um die Abschirmung noch weiter zu verbessern, ist erfindungsgemäß vorgesehen, die Induktionsspule und ihren ersten Mantel 3 an dessen Außenumfang von einem zweiten Mantel 9 zu umgeben - zumindest bei Verzicht auf eine Kühlung des zweiten Mantels vorzugsweise so, dass der erste und der zweite Mantel einander berühren, idealerweise auf dem überwiegenden bzw. gesamten Teil ihrer einander zugewandten Umfangsflächen.

Dieser zweite Mantel 9 ist aus magnetisch nicht leitfähigem und elektrisch leitfähigem Material hergestellt. Unter "elektrisch leitfähig" wird hier ein nicht nur lediglich lokal, sozusagen "kornweise" elektrisch leitfähiges Material verstanden, sondern ein Material, das in erfindungsrelevantem Umfang die Ausbildung von Wirbelströmen zulässt, dazu sogleich.

Das Besondere an dem zweiten Mantel ist, dass er bevorzugt so ausgelegt und bevorzugt in radialer Richtung so dick ausgelegt ist, dass in ihm unter dem Einfluss des ihn durchdringenden Streufeldes der Induktionsspule Wirbelströme erzeugt werden, die eine Schwächung des unerwünschten Streufeldes bewirken. Man macht sich hier also das Prinzip der aktiven Abschirmung durch ein Gegenfeld zu nutze. Dadurch kann erreicht werden, dass an der Außenoberfläche des zweiten Mantels das Streufeld um mehr als 50% verringert wird, idealerweise um mindestens 75%. Entscheidend ist, dass das Streufeld an der Oberfläche des zweiten Mantels jedenfalls soweit verringert wird, dass dort gefahrlos Halbleiterbauteile angeordnet werden können.

Entscheidend ist, dass dieser zweite Mantel in radialer Richtung bzw. magnetisch durch den ersten Mantel von der Induktionsspule getrennt ist, da er sich sonst zu stark aufheizen würde - was hier nicht der Fall ist, da er nicht im Hauptfeld liegt, sondern nur im Streufeld.

Für den hier im Zusammenhang mit dem zweiten Mantel verwendeten Begriff "Mantel" gilt das oben im Zusammenhang mit ersten Mantel Definierte sinngemäß. Allerdings bedeutet der Begriff "Mantel" im Zusammenhang mit dem zweiten Mantel nicht, dass ein in Umfangsrichtung endloser Rohrabschnitt zum Einsatz kommen muss. Stattdessen ist der Mantel vorzugsweise in einzelne Segmente aufgeteilt, die elektrisch voneinander isoliert sind, etwa durch mit Klebstoff oder Kunststoff gefüllte Fugen. Diese Ausgestaltungsart dient dazu, einen Reihenkurzschluss zu verhindern, wie er bei einem endlosen Rohrabschnitt die Folge wäre, wenn an einem Leistungshalbleiterbauelement ein Spannungsdurchschlag in den zweiten Mantel erfolgt und alle Leistungshalbleiterbauelemente längs des zweiten Mantels auf dem gleichen Potential anliegen.

Wichtig ist aber, dass die einzelnen Segmente jeweils so groß ausgeführt sind, dass das Streufeld in ihnen feldschwächende Wirbelströme induzieren kann, im Einzelfall ist dabei kein Vollmantel erforderlich, sondern es kann eine leitfähige (in Ansehung der konkreten individuellen Verhältnisse) hinreichend dick dimensionierte Gitterstruktur ausreichen.

Zu betonen ist an dieser Stelle, dass ein lediglich zu mechanischen Schutzzwecken vorgesehenes, in radialer Richtung dünnwandiges Gehäuse nicht ausreicht, selbst wenn es aus elektrisch leitfähigem Material bestanden haben sollte. Um den gewünschten, erfindungsgemäßen Effekt zu erzielen, ist eine zielgerichtete Auslegung der radialen Wandstärke des zweiten Mantels erforderlich.

Bevorzugtes Material zur Herstellung des zweiten Mantels 9 ist Aluminium.

Der zweite Mantel 9 kann in seinem Inneren vorzugsweise in Umfangsrichtung verlaufende, ggf. schraubenförmig umlaufende Kühlkanäle aufweisen, die letzteren Falls idealerweise ein Gewinde bilden.

In diesem Falle ist es besonders günstig, den zweiten Mantel 9 zwei- oder mehrteilig auszuführen. Dessen erster Teil trägt dann an seinem Umfang in ihn eingearbeitete Kühlkanäle, die dessen zweiter Teil abdichtet.

An diesem Punkt ist bereits auf den linken Teil der Fig. 11 hinzuweisen. Hier sieht man die Kühlmittelspeiseleitungen 17, die frisches Kühlmittel am Anfang des oder der Kühlkanäle 16 einspeisen und verbrauchtes Kühlmittel abführen.

### Die besondere Anordnung der Leistungshalbleiterbauelemente, der Kondensatoren und ggf. der elektronischen Steuerung

Wie man gut anhand der Fig. 11 und der Fig. 14 sieht, ist der zweite Mantel an seinem Umfang von den nachfolgend noch näher zu erläuternden Leistungshalbleiterbauelementen 10 umgeben, die unmittelbar am Außenumfang des zweiten Mantels angeordnet sind.

Im vorliegenden Fall ist es so, dass die Leistungshalbleiterbauelemente zwei große Hauptflächen haben und vier kleine Seitenflächen. Die großen Hauptflächen sind vorzugsweise mehr als viermal größer als jede der einzelnen Seitenflächen. Die Leistungshalbleiterbauelemente 10 sind so angeordnet, dass eine ihrer großen Hauptflächen in wärmeleitendem Kontakt mit dem zweiten Mantel 9 steht, im Regelfall an dessen Außenumfang.

Idealerweise ist die betreffende große Hauptfläche des Leistungshalbleiterbauelements 10 mithilfe eines wärmeleitenden Klebstoffs an die Umfangsoberfläche des zweiten Mantels 9 angeklebt. Der zweite Mantel 9 hat also hier eine Doppelfunktion. Er verbessert also nicht nur die Abschirmung und macht dadurch die Anordnung der Leistungshalbleiterbauelemente in seinem radialen Nahbereich (weniger als 10 cm Entfernung von seiner Umfangsoberfläche) möglich, sondern fungiert optional zugleich als Kühlkörper für die Leistungshalbleiterbauelemente.

Besonders bevorzugt ist der zweite Mantel 9 mit Aussparungen 11 versehen, von denen je eine ein Leistungshalbleiterbauelement aufnimmt, vgl. Fig. 14. Gut zu erkennen ist, dass die Aussparungen 11 idealerweise so gestaltet sind, dass sie das von ihnen aufgenommene Leistungshalbleiterbauelement 10 an vier Seiten vollständig umgeben. Das Leistungshalbleiterbauelement 10 sitzt auf diese Art und Weise sozusagen in einer Senke und ist dadurch besonders gut abgeschirmt.

Wie man ebenfalls gut sieht, besitzt jedes der Leistungshalbleiterbauelemente 10 drei Anschlüsse 12 zur Spannungsversorgung. Die Anschlüsse 12 jedes Leistungshalbleiterbauelements 10 ragen hier in einen einen Rücksprung 13 bildenden Bereich des zweiten Mantels 9 hinein, vgl. Fig. 14. Dieser optionale Rücksprung 13 erleichtert ggf. die Verkabelung der Anschlüsse 12 des jeweiligen Leistungshalbleiterbauelements 10.

Im erörterten Ausführungsbeispiel hat es allerdings mit der neuartigen Anordnung der Leistungshalbleiterbauelemente 10, noch nicht sein Bewenden. Stattdessen ist hier eine besonders bevorzugte Lösung realisiert, bei der die Kondensatoren 14a, 14b am Außenumfang der Induktionsspule um diese herumgruppiert sind. Bei den Kondensatoren 14a handelt es sich bevorzugt um Glättungskondensatoren, die unmittelbarer Bestandteil des Leistungskreises sind, bei den Kondensatoren 14b handelt es sich bevorzugt um Schwingkreiskondensatoren, die ebenfalls unmittelbarer Bestandteil des Leistungskreises sind. Die Kondensatoren 14a, 14b bilden hier, wenn man sie gedanklich um das Zentrum der Spule rotieren lässt, einen Zylinderring.

Dieser Zylinderring umgibt die Induktionsspule und vorzugsweise auch die an deren Umfang um diese herumgruppierten Leistungshalbleiterbauelemente.

Um die Kondensatoren 14a, 14b elektrisch anzuschließen, sind hier mehrere elektrische Platinen 15a, 15b vorgesehen, die jeweils den Außenumfang der Induktionsspule umgreifen. Jede dieser Platinen 15a, 15b bildet vorzugsweise eine Ringscheibe. Jeder der Platinen besteht vorzugsweise aus FR4 oder ähnlichen für Platinen gebräuchlichen Materialien. Wie man sieht, ist die Rotationssymmetrieachse jeder der beiden hier als Platinenringscheiben ausgeführten Platinen hier koaxial zur Längsachse der Spule. Optional ist jede der Platinen an der Grabeninnenseite der magnetischen Abdeckungen 3a, 3b befestigt, dort wo die magnetischen Abdeckungen 3a, 3b in radialer Richtung über den zweiten Mantel hinausragen.

Die obere der beiden elektrischen Platinen 15a trägt die Kondensatoren - etwa die Glättungskondensatoren 14a oder die Schwingkreiskondensatoren 14b -, deren Anschlussfahnen die Platine durchgreifen oder mithilfe der SMD-Technik mit der Platine verbunden sind, so, dass die Glättungskondensatoren von der Platine herabhängen. Die untere der beiden Platinen ist entsprechend aufgebaut, die Kondensatoren - etwa die Schwingkreiskondensatoren 14b oder die Glättungskondensatoren 14a -, stehen nach oben von ihr ab. Insgesamt ist es so, dass die beiden elektrischen Platinen 15a, 15b sämtliche Kondensatoren 14a, 14b des die Induktionsspule speisenden Leistungskreises zwischen sich aufnehmen, gesehen in Richtung entlang zur Längsachse der Induktionsspule.

Man kann also sagen, dass die Leistungshalbleiter einen ersten gedachten Zylinder bilden, der die Induktionsspule umringt, und die Kondensatoren 14a, 14b einen zweiten gedachten Zylinder bilden, der den ersten gedachten Zylinder umringt.

Vorzugsweise bilden die gegenüber dem Streufeld nur weniger empfindlichen Kondensatoren den gedachten, äußeren Zylinder, während die auf einen möglichst streufeldarmen Einbauraum angewiesenen Leistungshalbleiterbauelemente den gedachten, inneren Zylinder bilden.

### Die besondere Ausgestaltung der Steuerungsplatine oder anderer Platinen

Es kann erforderlich sein, die Platine, auf der die Steuerung sitzt, und/oder die Platinen, die die unmittelbar im Leistungskreis liegenden Kondensatoren kontaktieren, geschirmt auszuführen.

Zu diesem Zweck kommen vorzugsweise mehrschichtige Platinen zum Einsatz bzw. die sog. Multilayertechnik. Dabei werden zwei oder mehr Platinen aufeinandergelegt. Die Leiterbahnen verlaufen überwiegend bzw. im Wesentlichen im Inneren des so entstandenen Platinenpakets. Zumindest eine außenliegende Hauptfläche des Platinenpakets ist im Wesentlichen vollflächig metallisiert und dient daher als Schirmung.

### Die besondere Versorgung der Induktionsspule

Zunächst sei als allgemeine Bemerkung vorweggeschickt, dass die von Figur 10 gezeigte Spule vorzugsweise nicht über ihre gesamte Länge hinweg "voll bewickelt" ist. Stattdessen besteht sie bevorzugt aus zwei, im Regelfall im Wesentlichen zylindrischen Wicklungspaketen. Diese bilden jeweils eine Stirnseite der Induktionsspule. Vorzugsweise ist die eine (hier die untere) der beiden Spulen in Richtung parallel zur Längsachse L beweglich und damit im laufenden Betrieb so verstellbar, dass immer nur der Bereich der jeweiligen Hülsenpartie erhitzt wird, der der Erhitzung bedarf.

Das verhindert eine unnötige Erhitzung und auch die Erzeugung eines unnötig starken Feldes, was sich natürlich entsprechend auf das anzutreffende Streufeld auswirkt. Eine derartige Spule trägt zudem zur Verringerung der Blindleistung bei, da ihr die Wicklungen im Mittenbereich fehlen, die unter dem Gesichtspunkt der möglichst effektiven Beheizung der Hülsenpartie des Werkzeughalters nicht unbedingt benötigt werden, die aber - wenn vorhanden - die Tendenz haben, zusätzliche Blindleistung produzieren, ohne einen wirklich wichtigen Beitrag zur Beheizung zu leisten.

Um die Induktionsspule so zu versorgen, dass sie die gewünschte Wirkung entfaltet und die Hülsenpartie eines Werkzeughalters hinreichend schnell aufheizt, genügt es im Regelfall nicht, die Induktionsspule kurzerhand unmittelbar an die 50 Hz Netzwechselspannung anzuschließen.

Stattdessen muss die Frequenz der Spannung, mit der die Spule gespeist wird, erhöht werden. Das erfolgt im Regelfall elektronisch mithilfe eines Frequenzumrichters. Speist man die Spule nun allerdings einfach mit einen Frequenzumrichter, ohne weitere spezielle Maßnahmen zu treffen, wie in der Praxis bisher häufig geschehen, dann kommt es zu hohen Blindleistungsverlusten.

Diese Blindleistungsverluste sind unter dem Gesichtspunkt der Energieeffizienz nicht weiter relevant, da die Einschaltdauern bei einem Schrumpfgerät klein sind - schon nach wenigen Sekunden Einschaltdauer hat die Induktionsspule die Hülsenpartie eines Werkzeughalters so weit erhitzt, dass der Werkzeugschaft ein- oder ausgebaut werden kann, weshalb die Blindleistungsverluste bisher nicht als störend empfunden wurden.

Die Erfinder haben nun erkannt, dass die Vermeidung von Blindleistungsverlusten gleichwohl wichtig ist, da sie zur Erwärmung unter anderem der Induktionsspule selbst führen. Um die Blindleistungsverluste vermeiden zu können, ist erfindungsgemäß vorgesehen, die Induktionsspule über einen Schwingkreis zu versorgen.

Bei dem erfindungsgemäßen Schwingkreis schwingt der überwiegende Teil der benötigten Energie periodisch (hochfrequent) zwischen der Induktionsspule und einer Kondensatoreinheit hin- und her. Dadurch muss in jeder Periode bzw. periodisch nur die dem Schwingkreis durch seine Heizleistung und seine sonstige Verlustleistung entzogene Energie nachgespeist werden. Somit entfallen die bisherigen, sehr hohen Blindleistungsverluste. Das führt dazu, dass sich die Bauteile der Leistungselektronik erstmals so stark miniaturisieren lassen, dass - meist bei zusätzlicher Lösung des besonderen Abschirmungsproblems, das dieser Einbau aufweist - sie in das Spulengehäuse integriert werden können.

Somit rückt ein tragbares Induktions-Schrumpfgerät in greifbare Nähe, das wegen seines Gesamtgewichts von unter 10 kg vom Benutzer zur Werkzeugmaschine getragen werden kann, um es vor Ort einzusetzen.

Die die Induktionsspule speisende Leistungselektronik ist vorzugsweise so gestaltet, wie das die Figur 16 wiedergibt und zeichnet sich dann durch folgende Merkmale aus: Eingangsseitig wird die Leistungselektronik vorzugsweise mit dem allgemein verfügbaren Netzstrom NST, der in Europa 230 V / 50 Hz / 16Amax (in anderen Ländern entsprechende Werte z. B. USA 110 V) beträgt, gespeist. Das wird dadurch, dass die bisherigen Blindleistungen vermieden werden, erstmals möglich, während bisher ein 380 V "Drehstrom"-Anschluss erforderlich war.

Dies schließt nicht aus, dass unter besonderen Bedingungen, z. B. hoher Leistungsbedarf, dennoch ein 3-phasiger Drehstromanschluss notwendig wird. Selbstverständlich kann auch bei geringem Leistungsbedarf mit Drehstrom gearbeitet werden.

Der Netzstrom wird dann bevorzugt auf eine höhere Spannung hochtransformiert (Trafo T), um die bei vorgegebener Leistung fließenden Ströme zu verringern. Der aus dem Netz bezogene Strom wird vom Gleichrichter G in Gleichstrom umgewandelt, der seinerseits durch den oder die Glättungskondensatoren 14a geglättet wird.

Mit diesem Gleichstrom wird der eigentliche Schwingkreis SKS gespeist. Das Rückgrat des Schwingkreises bilden die Leistungshalbleiterbauelemente 10, die Schwingkreiskondensatoren 14b und die zum Ein- und Ausschrumpfen dienende Induktionsspule 1.

Gesteuert bzw. geregelt wird der Schwingkreis von der Steuerelektronik SEK, die im Wesentlichen als IC ausgebildet ist und die über einen eigenen Eingang GNS mit Gleichstrom-Niederspannung gespeist wird, die ggf. hinter dem Gleichrichter G und dem oder den Glättungskondensatoren 14a über einen entsprechenden Spannungsteiler-Widerstand abgegriffen wird.

Die Leistungshalbleiterbauelemente 10 werden vorzugsweise durch Transistoren des Typs "Insulated-Gate Bipolar Transistor" kurz IGBT verwirklicht.

Die Steuerelektronik SEK schaltet die IGBT bevorzugt mit einer Frequenz, die die sich am Schwingkreis SKS einstellende Arbeitsfrequenz vorgibt.

Wichtig ist, dass der Schwingkreis SKS niemals genau in Resonanz arbeitet, der bei einer Phasenverschiebung zwischen Spannung U und Strom I von cos φ =1 liegt. Dies würde hier zur raschen Zerstörung der Leistungshalbleiterbauelemente 10 durch die Spannungsspitzen führen. Stattdessen ist die Steuerelektronik SEK so gestaltet, dass sie die Leistungselektronik bzw. deren Schwingkreis SKS in einem Arbeitsbereich betreibt, der lediglich nahe der Resonanz bzw. Eigenfrequenz des Systems liegt.

Vorzugsweise wird der Schwingkreis so gesteuert bzw. geregelt, dass gilt 0,9 ≤ cos φ ≤ 0,99. Besonders günstig sind Werte, die im Bereich 0,95 ≤ cos φ ≤ 0,98 liegen. Dies führt nochmals zu einer Vermeidung von Spannungsspitzen und leistet daher der Miniaturisierung weiteren Vorschub.

Am Rande ist noch anzumerken, dass der minimierte Energieverbrauch erstmals einen Batteriebetrieb gestattet. Als geeignete Hochstrombatterie kann im einfachsten Fall eine Kraftfahrzeug-Starterbatterie zum Einsatz kommen.

### Die besondere Temperaturmessung

Es ist wünschenswert, Schrumpfgeräten der gattungsgemäßen Art ein Optimum an Betriebssicherheit zu verleihen. Dazu gehört zumindest eine automatische Steuerung der Heizzeit und/oder Heizleistung.

Die sogenannte Induktivität u = di/dt ist eine charakteristische Größe wechselstromdurchflossener Spulen. Bei Schrumpfgeräten der gattungsgemäßen Art bildet der in den von der Induktionsspule umfangsseitig umschlossenen Raum eingeschobene Werkzeughalter mit seiner Hülsenpartie einen wesentlichen Bestandteil des magnetischen Kreises. Die Hülsenpartie bildet nämlich den Metallkern der Spule. Das Maß der zu messenden Induktivität hängt daher entscheidend davon ab, in welchem Maß die Hülsenpartie das Zentrum bzw. den sogenannten Kern der Induktionsspule ausfüllt, d. h. ob die betreffende Hülsenpartie einen kleineren oder größeren Durchmesser bzw. mehr oder weniger Masse besitzt und somit einen kleineren oder größeren Eisenkern der Spule bildet.

Der Erfinder hat nun erstmals erkannt, dass die messbare Induktivität einer zum Schrumpfen eingesetzten Induktionsspule nicht nur von der Geometrie der Hülsenpartie abhängt, sondern in praktisch verwertbarem Umfang auch von der Temperatur der Hülsenpartie des Werkzeughalters. Je heißer die Hülsenpartie ist, desto größer ist die Induktivität des Systems aus der Hülsenpartie und der Induktionsspule.

Das wird sich erfindungsgemäß zu Nutze gemacht, um die Sicherheit der Schrumpfvorrichtung zu verbessern. Die Verfahrensführung bzw. die Verwendung und die dementsprechend konzipierte Schrumpfvorrichtung machen sich folgenden Gedanken zu Nutze:
Die Zahl der unterschiedlichen zum Einsatz auf der Schrumpfvorrichtung in Frage kommenden Werkzeughalter ist endlich. Aufgrund dessen ist es nicht schwer, alle oder zumindest die wichtigsten auf der Schrumpfvorrichtung zum Einsatz kommenden Werkzeughalter herstellerseitig zu vermessen und parametrisieren.

Im Übrigen kann dem Verwender leicht an die Hand gegeben werden, wie er Hülsenpartien von noch nicht werkseitig gespeicherten Werkzeughaltern vermessen und zusätzlich abspeichern kann. Das erfindungsgemäße Gerät verfügt optional über entsprechende Mittel oder Eingabemöglichkeiten. Im Idealfall erkennt es auf Basis der bisherigen Paramater und Datenbank die jeweiligen Konturen durch eine Messung und schließt dann auf die Induktivität bei dem verwendeten Schrumpffutter.

Dieses Vermessen erfolgt der Gestalt, dass die Hülsenpartien der entsprechenden Werkzeughalter in das Innere der Induktionsspule eingebracht werden und dann jeweils gemessen wird, welche momentanen Induktivitäten das System aus der Induktionsspule und der in sie eingebrachten Hülsenpartie aufweist, wenn die Hülsenpartie ihre maximale Temperatur erreicht hat. Als maximale Temperatur wird im Regelfall die Temperatur genommen, bei der optimal ein- und/oder ausgeschrumpft werden kann. So wird verhindert, dass die Hülsenpartie unnötig stark erhitzt wird und dann unnötig lange wieder abkühlen muss. Rein aus patentrechtlichen Gründen oder alternativ sei gesagt, dass die maximale Temperatur auch etwas höher gelegt werden kann. Die maximale Temperatur, die den Grenzwert bildet, ist dann die maximal zulässige Temperatur, bevor Zerstörung eintritt, als sogenannter Überhitzungsschutz.

Die so gemessenen Maximalwerte werden für jeden Werkzeughalter gespeichert, im Regelfall in der Schrumpfvorrichtung bzw. in deren Steuerung. Dort stehen sie für einen jederzeitigen Vergleich zur Verfügung.

Um einen bestimmten Werkzeughalter zu schrumpfen, wird die Hülsenpartie in die Induktionsspule eingebracht und in diesem Zusammenhang abgefragt, welcher Werkzeughalter nun einem Ein- oder Ausschrumpfen unterworfen werden soll. Nachdem der Benutzer das eingegeben hat oder dies automatisch erkannt wurde, wird für diesen Werkzeughalter ausgelesen, welche Induktivität das System Hülsenpartie/Induktionsspule hat, wenn die Hülsenpartie die gewünschte Temperatur hat. Sodann wird der induktive Heizvorgang gestartet. Dabei wird jeweils die momentane Induktivität gemessen. Sobald sich die aktuell gemessene momentane Induktivität dem Grenzwert (also der gespeicherten Induktivität) nähert oder diese überschreitet, wird die Stromzufuhr zu Induktionsspule beeinflusst - im Regelfall abgeschaltet oder zumindest soweit verringert, dass keine Schäden entstehen können.

Vorzugsweise wird dafür Sorge getragen, dass die induktive Beheizung eines Werkzeughalters bzw. seiner Hülsenpartie nur dann gestartet werden kann, wenn sichergestellt ist, dass auch wirklich ein Werkzeughalter mit einer kalten Hülsenpartie in die Induktionsspule eingebracht worden ist.

Um dies zu erreichen, erfolgt herstellerseitig eine weitere Vermessung.

Diese Messung hat die Gestalt, dass die Hülsenpartien der entsprechenden Werkzeughalter in das Innere der Induktionsspule eingebracht werden und dann jeweils gemessen wird, welche Induktivität das System aus der Induktionsspule und der in sie eingebrachten Hülsenpartie aufweist, wenn die Hülsenpartie kalt ist, also beispielsweise unter 35° erwärmt ist. Die so gemessenen Kaltwerte werden für jeden Werkzeughalter gespeichert, im Regelfall in der Schrumpfvorrichtung bzw. in dessen Steuerung. Dort stehen sie für einen am Anfang eines Schrumpfprozesses durchzuführenden Vergleich zur Verfügung.

Sobald der Benutzer eingegeben hat oder automatisch erkannt worden ist, welcher Werkzeughalter mit welcher Hülsenpartie in die Induktionsspule eingebracht worden ist, wird die Induktionsspule zumindest kurzzeitig bestromt und dabei die momentane Induktivität gemessen. Stellt sich dabei heraus, dass die momentane Induktivität oberhalb des gespeicherten Kaltwerts liegt, dann ist dies ein Zeichen dafür, dass sich eine bereits heiße Hülsenpartie eines Werkzeughalters im Inneren der Induktionsspule befindet. Daraufhin wird eine Fehlermeldung ausgegeben und/oder vorzugsweise der Heizprozess nicht gestartet bzw. abgebrochen.

Vorzugsweise wird zum Zweck der Bestimmung der Induktivität die Flankensteilheit der Zeit/Stromkurve gemessen bzw. ausgewertet und zur Bestimmung der Induktivität herangezogen. Insoweit ist auf die Figur 17 zu verweisen. Die linke Hälfte der Figur 17 zeigt die Zeit-/Stromkurve, die das System aus Induktionsspule und Hülsenpartie bei Speisung durch einen Frequenzumrichter bei kalter Hülsenpartie zeigt. Die rechte Hälfte der Figur 17 zeigt die Zeit-/Stromkurve, die das System bei gleicher Speisung, aber bis auf Schrumpftemperatur erhitzter Hülsenpartie zeigt.

Eine besonders nützliche Option im Zusammenhang mit der erfindungsgemäßen Temperaturüberwachung ist die automatische Erkennung der Geometrie der jeweils in die Induktionsspule eingebrachten Hülsenpartie.

Hierzu dient nicht lediglich die Induktivität, sondern das Maß der Stromaufnahme durch die Induktionsspule im Verlaufe einer bestimmten Zeiteinheit. Das entscheidende Maß ist also nicht die Flankensteilheit der einzelnen Wellen, sondern die Zeit-/Stromkurve als ganze, für ein bestimmtes Zeitintervall.

Um dies zu ermitteln, wird mithilfe einer genau arbeitenden Leistungsquelle ein Strom (Prüfimpuls) mit bekannter Stromgröße, Stromform, Frequenz und Wirkungsdauer auf die Spule aufgegeben. Unter Stromgröße versteht man hier den Betrag der maximalen Amplitude des Stroms. Unter Stromform versteht man hier die Art der Wechselspannung, zum Beispiel eine Rechteckwechselspannung. Unter Einwirkungsdauer versteht man hier den Zeitraum, für den der Prüfimpuls aufgegeben wird.

Je nachdem, welchen Durchmesser bzw. welche Masse die betreffende Hülsenpartie hat, ergibt sich für sie ein unterschiedlicher Verlauf der Stromaufnahme innerhalb der betreffenden Zeiteinheit, also eine unterschiedliche Zeit-/Stromkurve. Das bedeutet, dass jede Hülsenpartie sozusagen einen magnetischen Fingerabdruck aufweist.

Aufgrund dessen kann auch hier wieder so vorgegangen werden, dass für sämtliche zur Bearbeitung auf dem Schrumpfgerät in Betracht zu ziehenden Hülsenpartien die Stromaufnahme innerhalb einer bestimmten Zeiteinheit, d.h. die Zeit-/Stromkurve, herstellerseitig gemessen und in der Schrumpfvorrichtung abgespeichert wird. Wenn nun der Kunde eine bestimmte Hülsenpartie eines bestimmten Werkzeughalters in die Induktionsspule eingebracht hat, wird ein entsprechender Prüfimpuls auf die Spule aufgegeben, noch vor Beginn des eigentlichen induktiven Heizvorgangs. Die dadurch erhaltene, gesamte Zeit-/Stromkurve wird mit den abgespeicherten Werten verglichen, um dadurch zu bestimmen, welche Hülsenpartie in die Induktionsspule eingebracht worden ist.

Dies erspart es dem Benutzer, zu Beginn der induktiven Beheizung angeben zu müssen, welchen Typ von Werkzeughalter mit welcher Hülsenpartie er aktuell mit dem Schrumpfgerät bearbeiten möchte. Dieses wird vielmehr automatisch erkannt. Dementsprechend kann das erfindungsgemäße Schrumpfgerät automatisch denjenigen, abgespeicherten Induktivitätswert aufrufen, der ein Maß dafür ist, ob der induktive Heizvorgang beendet werden muss. Gleichzeitig bietet sich die Möglichkeit, dass das erfindungsgemäße Schrumpfgerät auch automatisch den zu der betreffenden Hülsenpartie gehörenden Kaltwert der momentanen Induktivität aufruft und vor Beginn des induktiven Heizens feststellt, ob die in die Induktionsspule eingebrachte Hülsenpartie auch wirklich kalt ist.

Wie die in diesem Kapitel beschriebenen Messungen gerätetechnisch umgesetzt werden können, das zeigt die Figur 18.

Gut zu erkennen ist hier die Induktionsspule 1. Die Induktionsspule 1 wird durch eine Leistungsquelle 100 gespeist, die einen genau definierten Prüfimpuls, wie oben geschildert, erzeugt. Um einen solchen Prüfimpuls mit der nötigen Genauigkeit herzustellen, kann eine Regelungseinheit 110 vorgesehen sein.

Zwischen den beiden Anschlussleitungen der Induktionsspule 1 liegt ein Messgerät 101, das die momentane Induktivität misst, und bei dem es sich um ein Messgerät an sich bekannter Bauart handeln kann. Dieses Messgerät 101 enthält vorzugsweise einen Komparator, der die aktuell gemessene, momentane Induktivität mit einem Grenzwert der Induktivität vergleicht, der ein Maß dafür ist, dass die Hülsenpartie weit genug erwärmt worden ist, um ein- oder ausschrumpfen zu können. Vorzugsweise ist der Komparator auch dazu in der Lage, zu vergleichen, ob der aktuell gemessene Kaltwert der momentanen Induktivität dem Kaltwert der Induktivität entspricht, den die aktuell in die Induktionsspule eingebrachte Hülsenpartie haben sollte.

Über einen Wandler 102 ist eine Hilfsschaltung 103 angeschlossen. Diese Hilfsschaltung dient der Bestimmung, welche Geometrie die aktuell in die Induktionsspule eingebrachte Hülsenpartie aufweist. Die Hilfsschaltung besitzt zu diesem Zweck mindestens einen Messkondensator 104 und mindestens ein Messgerät 105. Das Messgerät 105 ist dazu in der Lage, die momentane Spannung zu messen, die über dem Kondensator anliegt. Darüber hinaus umfasst die Hilfsschaltung im Regelfall einen Entladewiderstand 106, der typischerweise auf Masse gelegt ist und der dafür sorgt, dass der Messkondensator nach einem Prüfzyklus wieder entladen wird, während der Widerstand so groß gewählt ist, dass er den eigentlichen, relativ kurzen Prüfzyklus nicht nachteilig beeinflusst.

Je nachdem, wie die Hülsenpartie HP gestaltet ist, die in das Innere der Induktionsspule 1 eingebracht wird (siehe auch die beiden Varianten in Figur 18), ändert sich die Zeit-/Stromkurve, die die mit dem besagten Prüfimpuls beaufschlagte Induktionsspule zeigt. Das führt dazu, dass sich auch die Zeit-/Stromkurve, die an dem Kondensator 104 mittels des Messgeräts 105 gemessen wird, entsprechend ändert. Diese Zeit-/Stromkurve ist jeweils ein Fingerabdruck dafür, wie die Hülsenpartie beschaffen ist.

### Mobile Einheit

Eine Besonderheit der Erfindung ist, dass erstmals eine mobile Schrumpfeinheit möglich wird, die betriebsbereit i. d. R. weniger als 10 kg wiegt, daher und meist auch wegen ihres Designs als "Nur-Spulengehäuse mit Anschlussstecker" leicht getragen bzw. rangiert werden kann. Sie kommt aufgrund dessen "zur Werkzeugmaschine", um für den Einsatz vor Ort an der Werkzeugmaschine verwendet zu werden. Somit kann von dem bisherigen Konzept der stationären Schrumpfmaschine, zu der die Werkzeughalter angeliefert und von der die Werkzeughalter wieder abtransportiert werden müssen, um einen Werkzeugwechsel durchzuführen und weiterzuarbeiten, abgegangen werden.

Zunächst sei mit allgemeiner Geltung gesagt, dass zumindest die Komponenten "Induktionsspule, der erste Mantel und, soweit vorhanden, auch der zweite Mantel, die Leistungshalbleiterbauelemente und vorzugsweise auch die Kondensatoren" in einem gemeinsamen Gehäuse untergebracht sind. Idealerweise sind zusätzlich zu der Induktionsspule alle für den Betrieb der Induktionsspule erforderlichen Bauteile einschließlich der Steuerelektronik im gemeinsamen Gehäuse untergebracht.

Vorzugsweise verlässt das Gehäuse nur ein Speisekabel, das zur Spannungsversorgung des so gebildeten Schrumpfgeräts dient und zu diesem Zweck an seinem Ende idealerweise einen Stecker trägt, der den werkzeuglosen Anschluss an die Spannungsversorgung ermöglicht. Als Spannungsversorgung kommt hier vorzugsweise Netzspannung zu Einsatz, wie oben erwähnt. Das Ende des Speisekabels ist dann bevorzugt mit einem Schukostecker ausgerüstet, der den jeweiligen nationalen Anforderungen entspricht.

Wenn die Schrumpfvorrichtung von Hand gehalten werden soll, sind vorteilhaft Zentriermittel am Spulengehäuse angebracht, die die zentrische Positionierung der Spule zur Werkzeugachse erleichtern. Die Zentriermittel können beispielsweise als radial bewegliche Finger Fi ausgeführt sein, wie in Figur 10 und 11 angedeutet.

Als besonders zweckmäßig hat es sich erwiesen, wenn die Vorrichtung mit mindestens einer Kupplung KU versehen ist, die ihr Ankuppeln an der Werkzeugmaschine erlaubt.

Dadurch kann die Vorrichtung einfach an der Werkzeugmaschine befestigt werden und nimmt dann eine arbeitssichere und vor Verschmutzung durch Kühlmittel und Spanpartikel geschützte Arbeitsposition ein.

Diese Kupplung KU entspricht vorzugsweise den gängigen Kupplungsprofilen, wie sie für die mit der erfindungsgemäßen Schrumpfvorrichtung zu bearbeitenden Werkzeughalter zum Einsatz kommen, z. B. einem HSK-Profil, wie von Fig. 11 gezeigt. Um die erfindungsgemäße Schrumpfvorrichtung in eine sichere Arbeitsposition zu bringen, ist dann nichts anderes erforderlich, als den einem Werkzeugwechsel zu unterziehenden Werkzeughalter von der Spindel der Werkzeugmaschine abzukuppeln und stattdessen die Schrumpfvorrichtung mit ihrem identischen Kupplungsprofil an die Spindel der Werkzeugmaschine anzukuppeln. Besonders günstig ist es, wenn die Kupplung der Schrumpfvorrichtung betriebsmäßig von der Schrumpfvorrichtung abgebaut werden kann, vorzugsweise werkzeuglos von Hand (insbes. Bajonettverschluss). Dadurch kann die Kupplung der Schrumpfvorrichtung leicht an den auf der jeweiligen Werkzeugmaschine zum Einsatz kommenden Kupplungstyp angepasst werden - Steilkegelkupplung, HSK usw.

Idealerweise sind die jeweiligen Kupplungen derart an die erfindungsgemäße Schrumpfvorrichtung angeschlossen, dass vom Kühlsystem der Werkzeugmaschine ausgegebene Kühlflüssigkeit/ausgegebener Kühlschmierstoff den mindestens einen Kühlkanal durchströmen kann, den die Schrumpfvorrichtung besitzt, vorzugsweise in ihrem zweiten Mantel - wie oben dargelegt.

Dabei kann zusätzlich eine - vorzugsweise eine (meist benachbart zur Induktionsspule) in die Schrumpfvorrichtung integrierte - Kühleinrichtung vorgesehen sein. In diese wird die Hülsenpartie des Werkzeughalters nach Beendigung des Schrumpfvorgangs hineingesteckt, um sie aktiv auf eine gefahrlose Berührungstemperatur herunter zu kühlen.

Zweckmäßigerweise wird diese Kühleinrichtung ebenfalls vom Kühlsystem der Werkzeugmaschine gespeist, im Regelfall ebenfalls über die besagte Kupplung. Aufgrund dessen wird auch Schutz für die Verwendung der von einer Werkzeugmaschine ausgegebenen Kühlflüssigkeit zu Kühlungszwecken (Kühlung des zweiten Mantels und/oder des Werkzeughalters) innerhalb eines Schrumpfgeräts beansprucht.

Alternativ kann die Schrumpfvorrichtung auch im Werkzeugmagazin der Werkzeugmaschine aufbewahrt werden. Der Werkzeugwechsler kann die Schrumpfvorrichtung dann entweder automatisch in die Maschinenspindel einsetzen oder sie an eine in der Spindel eingespannte Werkzeugaufnahme heranführen, um ein Werkzeug aus- oder einzuschrumpfen. Im zweiten Fall kann die Energiezuführung über ein Kabel erfolgen, das über einen Stecker direkt an der Schrumpfvorrichtung angesteckt wird. In beiden Fällen muss die Schrumpfvorrichtung nicht von Hand gehalten werden.

### Allgemeine Anmerkungen

Schutz wird auch für solche Schrumpfvorrichtungen oder Verfahren bzw. Verwendungen beansprucht, die jeweils nur, unabhängig von durch den derzeit aufgestellten Anspruchssatz beanspruchten Merkmalen, die Merkmale eines oder mehrerer der nachfolgend aufgeführten Absätze besitzen. Darüber hinaus wird auch Schutz für solche Schrumpfvorrichtungen oder Verfahren bzw. Verwendungen beansprucht, die Merkmale eines oder mehrerer der nachfolgend aufgelisteten Absätze aufweisen und zusätzlich andere Merkmale aus den bereits aufgestellten Ansprüchen oder der sonstigen Beschreibung einschließlich der Figuren.

Schrumpfvorrichtung, sich dadurch abhebend, dass die Platine eine Platinenringscheibe ist, deren Rotationssymmetrieachse bevorzugt koaxial, ansonsten parallel zu der Längsachse der Induktionsspule verläuft.

Schrumpfvorrichtung, sich dadurch abhebend, dass zwei Platinenringscheiben vorhanden sind, zwischen denen entlang des Umfangs der Induktionsspule die Glättungskondensatoren angeordnet sind.

Schrumpfvorrichtung, sich dadurch abhebend, dass der zweite Mantel einen oder mehrere Kühlkanäle bildet, die vorzugsweise in seinem Inneren verlaufen.

Schrumpfvorrichtung, sich dadurch abhebend, dass die Vorrichtung eine Kupplung zum Befestigen der Vorrichtung in der Aufnahme einer Werkzeugmaschinenspindel aufweist.

Schrumpfvorrichtung, sich dadurch abhebend, dass die Schrumpfvorrichtung so beschaffen ist, dass sie durch das Kühlsystem der Werkzeugmaschine mit Kühlmittel gespeist werden kann.

Schrumpfvorrichtung, sich dadurch abhebend, dass die Induktionsspule mit ihrem ersten und zweiten Mantel und mindestens die Leistungshalbleiterbauelemente und/oder die Glättungskondensatoren und idealerweise auch die Elektronik zum Ansteuern der Leistungshalbleiterbauelemente im Inneren eines Spulengehäuses oder Spulengehäuserings untergebracht sind, der oder das zumindest den Umfang der Induktionsspule umschließt und vorzugsweise auch mindestens eine, besser beide Stirnseiten der Induktionsspule übergreift.

Schrumpfvorrichtung, sich dadurch abhebend, dass das Spulengehäuse einen Stecker zum unmittelbaren Einspeisen von Netzwechselspannung aus dem öffentlichen Netz (110 V, 230 V oder 380 V) besitzt.

Schrumpfvorrichtung, sich dadurch abhebend, dass die Schrumpfvorrichtung batteriebetrieben ist.

Schrumpfvorrichtung, sich dadurch abhebend, dass ein Abschirmkragen vorgesehen ist, der aus einzelnen Segmenten besteht, die derart beweglich sind, dass sie sowohl mit einer Bewegungskomponente in radialer als auch mit einer Bewegungskomponente in axialer Richtung verfahren werden können.

Schrumpfvorrichtung, sich dadurch abhebend, dass an der dem Werkzeughalter zugewandten Stirnseite der Induktionsspule und/oder im Luftinnenraum der Induktionsspule Zentrierorgane vorgesehen sind, die jedenfalls bei auf Anschlag in die Induktionsspule eingeschobener Hülsenpartie deren koaxiale Positionierung in der Induktionsspule erzwingen.

Schrumpfvorrichtung, sich dadurch abhebend, dass die Schrumpfvorrichtung mindestens zwei Spulenwicklungsabschnitte besitzt, die in Richtung parallel zur Längsachse im Betrieb zum Zwecke der Einstellung auf die Geometrie einer zu erhitzenden Hülsenpartie aufeinander zu oder voneinander weg bewegt werden können.

Schrumpfsystem, bestehend aus einer Schrumpfvorrichtung nach einem der vorhergehenden Absätze, sich dadurch abhebend, dass zu dem Schrumpfsystem zusätzlich unterschiedliche, an der Schrumpfvorrichtung befestigbare Kupplungen gehören, mittels derer die Schrumpfvorrichtung an die Spindel einer Werkzeugmaschine festgesetzt werden kann.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung zu verlassen.

### Bezugszeichenliste:

- 2: Gerät zu einer Wärmebehandlung, Schrumpfgerät, Kühlgerät, Schrumpfgerät mit Kühlgerät
- 4: Schrumpffutter
- 6: Schaft-/Rotationswerkzeug, Fräser/Fräswerkzeug
- 8: Aufnahmeeinrichtung, Aufnahmeöffnung
- 10: Mittelachse, Spulenachse

- 12: Wärmebehandlungseinheit, Induktionsspulenanordnung, Kühlgerät/-einheit
- 14: Mess-/Recheneinheit
- 16, 16': Temperatursensor, Pyrometer mit Strahlungsdetektor, Strahlungsdetektor
- 18: (Spulen-)Gehäuse
- 20: Unterbrechungen

- 22: Messkanal
- 24: Spulenwicklung
- 26: Durchbruch
- 28: Kontroll-/Steuereinheit

- 30: Quotientenpyrometer
- 32: Hülsenpartie
- 34: Spannbereich
- 36: Stirnöffnung
- 38: vorderes Stirnende

- 40: Werkzeugschaft, Fräserschaft
- 42: vorderer Arbeitsabschnitt
- 44: axialer Zentralbereich
- 46: spulenseitiger innerer Abschnitt
- 48: Außenwand

- 50: Induktionsspulengehäuse
- 52: Kabel
- 54: Fokussiervorrichtung, Abschirmeinrichtung, Blende
- 56: (ringförmige) Baueinheit, Mess-/Sensorring
- 58: Mittelachse der (ringförmigen) Baueinheit/Messrings

- 60: Sensor
- 62: (Infrarot-)Reflexionssensor
- 64: Anzeigeeinrichtung, (LED-)(Wärme-)Statusanzeige

- 70: Ständer
- 72: Kühlkopf
- 74: Kühlaufsatz
- 76: (Messring-)Gehäuse
- 78: Sender

- 80: Empfänger
- 82: (rote) Leuchtdiode
- 84: Zuleitung
- 86: Microcontroller
- 88: (linker) Schenkel

- 90: (rechter) Schenkel
- 92: Durchgang, Unterbrechung
- 94: (grüne) Leuchtdiode

- 100: Verfahren
- 120: Wärmebehandeln, Erwärmen, Ein-/Ausschrumpfen, Kühlen
- 140: Ermitteln einer resultierenden Mantel/Oberflächentemperatur
- 160: Kontrolle/Steuerung der Wärmebehandlung, Kontrolle/Steuerung der Erwärmung/des Kühlens, Kontrolle/Steuerung der der Erwärmungsleistung bzw. der Stromzufuhr

- 200: Zusammenwirken mehrerer Sensoren (16, 62)

- 220: Erkennen eines in der Aufnahmeeinrichtung (8) aufgenommenen Schrumpffutters (4) unter Verwendung des Reflexionssensors

## Patentansprüche

1. **Gerät** (2) zu einer Wärmebehandlung, insbesondere zu einem induktiven Erwärmen oder einem Kühlen, von Schrumpffuttern (4) für Schaftwerkzeuge (6), insbesondere ein Schrumpfgerät (2) oder ein Kühlgerät (2) oder ein Schrumpfgerät mit Kühlgerät (2), mit einer Aufnahmeeinrichtung (8), insbesondere einer Aufnahmeöffnung (8), zum Aufnehmen eines Schrumpffutters (4), einer die Aufnahmeeinrichtung (8) bezüglich einer Mittelachse (10), insbesondere konzentrisch, umschließenden Wärmebehandlungseinheit (12), insbesondere einer Induktionsspulenanordnung (12) oder einer Kühleinheit (12), und einer Mess-/Recheneinheit (14) zur, insbesondere berührungslosen, Temperaturmessung des Schrumpffutters (4),
**dadurch gekennzeichnet, dass**
die Mess-/Recheneinheit (14) zumindest einen Temperatursensor (16) zur, insbesondere berührungslosen, Erfassung einer Manteltemperatur eines in der Aufnahmeeinrichtung (8) angeordneten Schrumpffutters (4), und einen Reflexionssensor (62), insbesondere einen Infrarot-Reflexionssensor (62) aufweist, welche um die Aufnahmeeinrichtung (8) herum angeordnet sind,
wobei die Mess-/Recheneinheit (14) derart eingerichtet ist, dass
ein Strom (Prüfimpuls) mit bekannter Stromgröße, Stromform, Frequenz und Wirkungsdauer auf die Wärmebehandlungseinheit (12), insbesondere die Induktionsspulenanordnung (12), noch vor Beginn eines eigentlichen Wärmebehandlungsvorgangs, insbesondere des Kühlvorgangs oder des induktiven Heizvorgangs bei dem in der Wärmebehandlungseinheit (12), insbesondere Induktionsspulenanordnung (12), eingebrachten Schrumpffutter (4) aufgegeben wird,
für diesen Prüfimpuls eine Zeit-/Stromkurve für das in die Wärmebehandlungseinheit (12), insbesondere Induktionsspulenanordnung (12), eingebrachten Schrumpffutter (4) ermittelt wird und die für den Prüfimpuls ermittelte Zeit-/Stromkurve als Ganze als ein magnetischer Fingerabdruck für das in die Wärmebehandlungseinheit (12), insbesondere Induktionsspulenanordnung (12), eingebrachten Schrumpffutter (4) hergenommen wird,
unter Verwendung des magnetischen Fingerabdrucks eine Geometrieinformation, insbesondere ein Außendurchmesser, für das in die Wärmebehandlungseinheit (12), insbesondere Induktionsspulenanordnung (12), eingebrachte Schrumpffutter (4) ermittelt wird,
eine Reflexionsmessung von dem Reflexionssensor (62) an dem in die Wärmebehandlungseinheit (12), insbesondere Induktionsspulenanordnung (12), eingebrachten Schrumpffutter (4) durchgeführt wird, insbesondere unter Verwendung der Geometrieinformation (Korrekturwert 1) eine Reflexionsmessung von dem Reflexionssensor (62) an dem in die Wärmebehandlungseinheit (12), insbesondere Induktionsspulenanordnung (12), eingebrachten Schrumpffutter (4) durchgeführt und korrigiert wird, und
unter Verwendung der Reflexionsmessung und der Geometrieinformation oder unter Verwendung der korrigierten Reflexionsmessung (Korrekturwert 2) eine Temperaturmessung von dem Temperatursensor (16) an dem in die Wärmebehandlungseinheit (12), insbesondere Induktionsspulenanordnung (12), eingebrachten Schrumpffutter (4) durchgeführt und korrigiert wird.

2. Gerät (2) nach einem der voranstehenden Ansprüche
**dadurch gekennzeichnet, dass**
die Messeinheit (14) mehrere um die Aufnahmeeinrichtung (8) herum angeordnete Temperatursensoren (16) zur, insbesondere berührungslosen, Erfassung einer Manteltemperatur eines in der Aufnahmeeinrichtung (8) angeordneten Schrumpffutters (4) aufweist oder dass die Messeinheit (14) zumindest einen um die Aufnahmeeinrichtung (8) herum angeordneten, insbesondere bezüglich der Mittelachse (10), schräggestellten Temperatursensor (16') zur, insbesondere berührungslosen, Erfassung einer Manteltemperatur eines in der Aufnahmeeinrichtung (8) angeordneten Schrumpffutters (4) aufweist.

3. Gerät (2) nach einem der voranstehenden Ansprüche
**dadurch gekennzeichnet, dass**
zumindest zwei, insbesondere mehrere oder alle, von den Temperatursensoren (16) unterschiedliche Konfigurationen/Messeinstellungen aufweisen.

4. Gerät (2) nach einem der voranstehenden Ansprüche
**dadurch gekennzeichnet, dass**
der Temperatursensor (16) oder die mehreren Temperatursensoren (16) jeweils und/oder der schräggestellte Temperatursensor (16') als Strahlungsdetektor, insbesondere als Pyrometer mit einem Strahlungsdetektor zur Erfassung einer Wärmestrahlung von einem in der Aufnahmeeinrichtung (8) angeordneten Schrumpffutter (4), ausgebildet sind.

5. Gerät (2) nach einem der voranstehenden Ansprüche
**dadurch gekennzeichnet, dass**
ein Schrägstellungswinkel des schräggestellten Temperatursensors (16') zwischen 30° und 60°, insbesondere 45°, beträgt.

6. Gerät (2) nach einem der voranstehenden Ansprüche
**dadurch gekennzeichnet, dass**
die Sensoren (16, 60, 62) kreisförmig und/oder auf unterschiedlicher axialer Höhe bezüglich der Mittelachse (10) bei der bzw. um die Aufnahmeeinrichtung (8) angeordnet sind.

7. Gerät (2) nach einem der voranstehenden Ansprüche
**dadurch gekennzeichnet, dass**
die Wärmebehandlungseinheit (12) und/oder ein Gehäuse (18, 50) der Wärmebehandlungseinheit (12) zumindest eine oder mehrere Unterbrechungen (20) aufweist, in oder an welcher bzw. welchen einer bzw. jeweils einer von den Sensoren (16, 60, 62) angeordnet ist.

8. Gerät (2) nach dem voranstehenden Anspruch,
**dadurch gekennzeichnet, dass**
eine solche Unterbrechung (20) als Messkanal (22) ausgebildet ist, welcher insbesondere im Wesentlichen radial zur Mittelachse (10) durch die Wärmebehandlungseinheit (12) und/oder durch das Gehäuse (18, 50) der Wärmebehandlungseinheit (12) hindurch verläuft.

9. Gerät (2) nach dem voranstehenden Anspruch,
**dadurch gekennzeichnet, dass**
die eine als Induktionsspulenanordnung (12) ausgebildete Wärmebehandlungseinheit (12) eine unter Freihaltung des Messkanals (22) bzw. der Messkanäle (22) gewickelte Spulenwicklung (24) und/oder Induktionsspulenteilanordnungen aufweist, zwischen welcher bzw. welchen der Messkanal (22) bzw. die Messkanäle (22) ausgebildet ist/sind.

10. Gerät (2) nach einem der Ansprüche 8 bis 9,
**dadurch gekennzeichnet, dass**
zumindest einer der Sensoren (16, 60, 62) mindestens teilweise in oder an einem solchen Messkanal (22) angeordnet ist, insbesondere derart, dass der zumindest eine Sensor (16, 60, 62) durch den einen solchen Messkanal (22) hindurch misst, insbesondere jeder von mehreren oder von allen von den Sensoren (16, 60, 62) mindestens teilweise in oder an einem solchen Messkanal (22) angeordnet ist, insbesondere derart, dass der Sensor (16, 60, 62) durch den Messkanal (22) hindurch misst.

11. Gerät (2) nach einem der voranstehenden Ansprüche
**dadurch gekennzeichnet, dass**
die Sensoren (16, 60, 62) in einer im Wesentlichen ringförmigen Baueinheit (56) angeordnet sind, insbesondere im Wesentlichen kreisförmig um eine Mittelachse (58) der im Wesentlichen ringförmigen Baueinheit (56) und/oder auf unterschiedlicher oder insbesondere auf gleicher axialer Höhe in Bezug auf die Mittelachse (58) der im Wesentlichen ringförmigen Baueinheit (56).

12. Gerät (2) nach dem voranstehenden Anspruch
**dadurch gekennzeichnet, dass**
die im Wesentlichen ringförmige Baueinheit (56) koaxial zu der Mittelachse (10) bei dem Gerät (2), insbesondere axial benachbart zu der Wärmebehandlungseinheit (12), insbesondere der Induktionsspulenanordnung (12) oder der Kühleinheit (12), angeordnet ist.

13. Gerät (2) nach einem der beiden voranstehenden Ansprüche
**dadurch gekennzeichnet, dass**
gleichartige von den Sensoren (16, 60, 62) benachbart in der im Wesentlichen ringförmigen Baueinheit (56) angeordnet sind.

14. Gerät (2) nach einem der voranstehenden Ansprüche
**gekennzeichnet, durch**
die Mess-/Recheneinheit derart eingerichtet ist, dass eine resultierende Manteltemperatur eines in der Aufnahmeeinrichtung (8) angeordneten Schrumpffutters (4) unter Verwendung der korrigierten Temperaturmessung von dem Temperatursensor (16) ermittelbar ist.

15. Gerät (2) nach dem voranstehenden Anspruch
**gekennzeichnet, durch**
eine Steuerung (28) der Wärmebehandlungseinheit (12), insbesondere der Induktionsspulenanordnung (12) oder der Kühleinheit (12), welche derart eingerichtet ist, dass eine Leistung der Wärmebehandlungseinheit (12), insbesondere eine Stromzufuhr, insbesondere einer als Induktionsspulenanordnung (12) ausgebildeten Wärmebehandlungseinheit (12), in Abhängigkeit der resultierenden Manteltemperatur steuerbar ist (160).

16. Gerät (2) nach einem der voranstehenden Ansprüche
**gekennzeichnet, durch**
eine Anzeigeeinrichtung (64) zur Anzeige eines Wärmezustands, insbesondere einer in der Aufnahmeeinrichtung (8) angeordneten Werkzeugaufnahme (4), insbesondere eines Schrumpffutters (4) .

17. **Verfahren** (100) zum Betreiben eines Geräts (2) nach mindestens einem der voranstehenden Geräteansprüche, insbesondere zu einem induktiven Aufheizen (120) von einem Schrumpffutter (4) oder einem Kühlen von einem Schrumpffutter (4), in einem Gerät (2) nach mindestens einem der voranstehenden Schrumpfgeräteansprüche,
bei welchem
ein Strom (Prüfimpuls) mit bekannter Stromgröße, Stromform, Frequenz und Wirkungsdauer auf die Wärmebehandlungseinheit (12), insbesondere die Induktionsspulenanordnung (12), noch vor Beginn eines eigentlichen Wärmebehandlungsvorgangs, insbesondere des Kühlvorgangs oder des induktiven Heizvorgangs bei dem in der Wärmebehandlungseinheit (12), insbesondere Induktionsspulenanordnung (12), eingebrachten Schrumpffutter (4) aufgegeben wird,
für diesen Prüfimpuls eine Zeit-/Stromkurve für das in die Wärmebehandlungseinheit (12), insbesondere Induktionsspulenanordnung (12), eingebrachten Schrumpffutter (4) ermittelt wird und die für den Prüfimpuls ermittelte Zeit-/Stromkurve als Ganze als der magnetische Fingerabdruck für das in die Wärmebehandlungseinheit (12), insbesondere Induktionsspulenanordnung (12), eingebrachten Schrumpffutter (4) hergenommen wird,
unter Verwendung des magnetischen Fingerabdrucks eine Geometrieinformation, insbesondere ein Außendurchmesser, für das in die Wärmebehandlungseinheit (12), insbesondere Induktionsspulenanordnung (12), eingebrachte Schrumpffutter (4) ermittelt wird,
eine Reflexionsmessung von dem Reflexionssensor (62) an dem in die Wärmebehandlungseinheit (12), insbesondere Induktionsspulenanordnung (12), eingebrachten Schrumpffutter (4) durchgeführt wird, insbesondere unter Verwendung der Geometrieinformation (Korrekturwert 1) eine Reflexionsmessung von dem Reflexionssensor (62) an dem in die Wärmebehandlungseinheit (12), insbesondere Induktionsspulenanordnung (12), eingebrachten Schrumpffutter (4) durchgeführt und korrigiert wird, und
unter Verwendung der korrigierten Reflexionsmessung (Korrekturwert 2) eine Temperaturmessung von dem Temperatursensor (16) an dem in die Wärmebehandlungseinheit (12), insbesondere Induktionsspulenanordnung (12), eingebrachten Schrumpffutter (4) korrigiert wird.

18. Verfahren (100) nach einem der voranstehenden Verfahrensansprüche,
**dadurch gekennzeichnet, dass**
eine resultierende Manteltemperatur eines in der Aufnahmeeinrichtung (8) angeordneten Schrumpffutters (4) unter Verwendung der korrigierten Temperaturmessung von dem Temperatursensor (16) ermittelbar ist.

19. Verfahren (100) nach einem der voranstehenden Verfahrensansprüche,
**dadurch gekennzeichnet, dass**
ein Schrumpffutter (4) in der von einer als Induktionsspulenanordnung (12) ausgebildeten Wärmebehandlungseinrichtung (12) umschlossenen Aufnahmeeinrichtung (8) induktiv erwärmt (120) und dadurch aufgeweitet wird und dass unter Verwendung der resultierenden Manteltemperatur der Erwärmungsvorgang kontrolliert wird (160), insbesondere der Erwärmungsvorgang bei Erreichen einer vorgegebenen Temperatur automatisch gestoppt wird
oder
dass ein Schrumpffutter (4) in der von einer als Kühleinheit (12) ausgebildeten Wärmebehandlungseinrichtung (12) umschlossenen Aufnahmeeinrichtung (8) gekühlt (120) und dass unter Verwendung der resultierenden Manteltemperatur der Kühlvorgang kontrolliert wird (160).

20. Verfahren nach einem der voranstehenden Verfahrensansprüche,
**dadurch gekennzeichnet, dass**
bei mehreren Temperatursensoren (16) unterschiedliche Kalibrierungen/Settings, insbesondere unterschiedliche Emissionsgrade ε eingestellt sind oder werden, und Messungen der mehreren Temperatursensoren (16) verglichen und/oder gemeinsam verarbeitet werden und daraus die resultierende Manteltemperatur bestimmt wird (140).

21. Verfahren nach einem der voranstehenden Verfahrensansprüche,
**dadurch gekennzeichnet, dass**
ein Signal ein und desselben Strahlungssensors (62) auf unterschiedliche Art ausgewertet wird.
